# EUROPEAN PATENT APPLICATION

(11) **EP 4 589 073 A1**
(43) Date of publication of application: **23.07.2025**
(21) Application number: 23879492.9
(22) Date of filing: 31.08.2023
(51) Int. Cl.: E02D 5/76, E02D 27/00, F16B 13/04, E04B 1/41

(54) **ANCHOR BOLT**

(30) Priority: 21.10.2022 JP 2022169116
(71) Applicant: A&S System Co,. Ltd., Kashiba-shi, Nara 639-0245 (JP)
(72) Inventor: ARAI, Isamu, Kashiba-shi, Nara 639-0245 (JP)
(74) Representative: Manitz Finsterwald Patent- und Rechtsanwaltspartnerschaft mbB
(86) International application number: PCT/JP2023/031978
(87) International publication number: WO 2024/084841

(57) **Abstract**

An anchor bolt (11-15) of the present disclosure includes: a bolt main body (21, 31, 41), with a screw thread formed on an outer peripheral surface thereof, configured to be inserted in the anchor hole; a tubular member (25, 35, 45, 451) provided to the bolt main body and configured to, in a state of being inserted in the anchor hole together with the bolt main body, come in contact with and be locked to an inner side surface of the anchor hole; an annular expansively openable member (26) provided to the bolt main body more on an insertion direction side of the anchor bolt than the tubular member, and divided in a peripheral direction; and a push-in portion (27, 47) provided to the bolt main body more on the insertion direction side of the anchor bolt than the expansively openable member, and configured to expand the expansively openable member radially outward by being pushed into an inner hole of the expansively openable member. The anchor bolt is configured such that a contact friction of a predetermined value or more is generated between a first end portion (255, 356, 459) located on the insertion direction side of the tubular member and a second end portion (265) located on a side of the expansively openable member opposite to the insertion direction.

## Description

### TECHNICAL FIELD

The present disclosure relates to an anchor bolt that is fixed in an anchor hole formed in a skeleton such as concrete.

### BACKGROUND ART

Conventionally, there is known, as an anchor bolt configured to be fixed in a skeleton such as concrete, an anchor bolt that includes: a tubular member having an expansively openable portion having a plurality of longitudinal slits at its tip; and a bolt that is inserted in the tubular member. In addition, there has been proposed an anchor bolt that includes, at its tip, an expansively openable portion formed by binding, with a binding thread or an elastic ring, a plurality of expansively openable pieces divided in a peripheral direction (see PTL 1 and PTL 2).

### CITATION LIST

### [PATENT LITERATURE]

[PTL 1] Japanese Patent Application Publication No. H4-249608
[PTL 2] Japanese Patent Application Publication No. 2003-268884

### SUMMARY OF THE INVENTION

### PROBLEMS TO BE SOLVED BY THE INVENTION

However, according to the conventional anchor bolt, since it has the plurality of expansively openable pieces divided in the peripheral direction, when an inclined surface of a cone portion expands the expansively openable portion, the expansively openable pieces are expanded outward. As a result, gaps are formed between the expansively openable pieces. For example, when the anchor bolt has two expansively openable pieces, two gaps are formed between the two expanded expansively openable pieces. In this case, at the inner peripheral surface of the anchor hole, each expansively openable piece bites a part of an inner wall that faces that expansively openable piece. However, the expansively openable pieces cannot bite parts that face the gaps. Accordingly, a sufficient pull-off strength cannot be obtained with the conventional anchor bolt.

The present disclosure has been made in view of such conventional circumstances, and it is an object of the present disclosure to provide an anchor bolt that enhances the pull-off strength.

### SOLUTION TO THE PROBLEMS

(1) An anchor bolt according to an aspect of the present disclosure is an anchor bolt configured to be fixed in an anchor hole formed in a skeleton. The anchor bolt includes: a bolt main body, with a screw thread formed on an outer peripheral surface thereof, configured to be inserted in the anchor hole; a tubular member provided to the bolt main body and configured to, in a state of being inserted in the anchor hole together with the bolt main body, come in contact with and be locked to an inner side surface of the anchor hole; an annular expansively openable member provided to the bolt main body more on an insertion direction side of the anchor bolt than the tubular member, and divided in a peripheral direction; and a push-in portion provided to the bolt main body more on the insertion direction side of the anchor bolt than the expansively openable member, and configured to expand the expansively openable member radially outward by being pushed into an inner hole of the expansively openable member. The anchor bolt is configured such that a contact friction of a predetermined value or more is generated between a first end portion located on the insertion direction side of the tubular member and a second end portion located on a side of the expansively openable member opposite to the insertion direction.
   With the above-described configuration, it is possible to minimize noncontact part of the expansively openable member that is not in contact with an inner side surface (inner wall) of the anchor hole. As a result, it is possible to enhance the pull-off strength of the anchor bolt. In addition, a contact friction of a predetermined value (a predetermined frictional force) or more is generated between the first end portion and the second end portion. With this configuration, during construction of the anchor bolt in the anchor hole, if the bolt main body and the push-in portion rotate around the axis of the bolt main body, and the expansively openable member tries to rotate in the same direction due to a friction between the push-in portion and the expansively openable member generated by the rotation, the first end portion and the second end portion become difficult to slide owing to the contact friction between the first end portion and the second end portion, suppressing the expansively openable member from rotating. This remarkably improves the workability of the anchor bolt. In addition, during construction of the anchor bolt, the expansively openable member does not rotate in the anchor hole and is expanded radially outward appropriately.
(2) As an example of a configuration for causing a contact friction between the first end portion and the second end portion, for example, either or both of an end surface of the first end portion and an end surface of the second end portion are uneven surfaces. When the end surfaces of the first end portion and the second end portion are uneven surfaces, a larger frictional force is generated therebetween when they contact each other. Accordingly, the end surfaces have a role of preventing sliding.
(3) As another example of a configuration for causing a contact friction between the first end portion and the second end portion, for example, a high-friction coating may be applied to either or both of an end surface of the first end portion and an end surface of the second end portion. When a high-friction coating is applied to the end surfaces of the first end portion and the second end portion, a larger frictional force is generated therebetween when they contact each other. Accordingly, the end surfaces have a role of preventing sliding.
(4) As another example of a configuration for causing a contact friction between the first end portion and the second end portion, for example, an annular member formed from synthetic resin that is lower in hardness than the expansively openable member may be interposed between the first end portion and the second end portion. The annular member has a role of preventing the expansively openable member from sliding with respect to the tubular member.
(5) An anchor bolt according to another aspect of the present disclosure is an anchor bolt configured to be fixed in an anchor hole formed in a skeleton. The anchor bolt includes: a bolt main body, with a screw thread formed on an outer peripheral surface thereof, configured to be inserted in the anchor hole; a tubular member provided to the bolt main body and configured to, in a state of being inserted in the anchor hole together with the bolt main body, come in contact with and be locked to an inner side surface of the anchor hole; an annular expansively openable member provided to the bolt main body more on an insertion direction side of the anchor bolt than the tubular member, and divided in a peripheral direction; and a push-in portion provided to the bolt main body more on the insertion direction side of the anchor bolt than the expansively openable member, and configured to expand the expansively openable member radially outward by being pushed into an inner hole of the expansively openable member. The anchor bolt is configured such that a first end portion located on the insertion direction side of the tubular member and a second end portion located on a side of the expansively openable member opposite to the insertion direction are engaged with each other around the axis.
   With the above-described configuration, it is possible to minimize noncontact part of the expansively openable member that is not in contact with an inner side surface (inner wall) of the anchor hole. As a result, it is possible to enhance the pull-off strength of the anchor bolt. In addition, the anchor bolt is configured such that the first end portion and the second end portion are engaged with each other around the axis. With this configuration, during construction of the anchor bolt in the anchor hole, if the bolt main body and the push-in portion rotate around the axis of the bolt main body, and the expansively openable member tries to rotate in the same direction due to a friction between the push-in portion and the expansively openable member generated by the rotation, the engagement between the first end portion and the second end portion prevents the expansively openable member from rotating. This remarkably improves the workability of the anchor bolt. In addition, during construction of the anchor bolt, the expansively openable member does not rotate in the anchor hole and is expanded radially outward appropriately.
(6) As an example of a configuration for engaging the first end portion with the second end portion, for example, the first end portion may include a first engagement portion, and the second end portion may include a second engagement portion configured to be engaged with the first engagement portion. In this configuration, the first engagement portion and the second engagement portion have a role of preventing the expansively openable member from rotating.
(7) In a case where a dividing slit is formed in the expansively openable member in such a way as to divide the expansively openable member in the peripheral direction, it is preferable that the second engagement portion is an end opening of the dividing slit at the second end portion, and the first engagement portion is a first protruding portion protruding from the first end portion in the insertion direction and configured to be inserted in the end opening and engaged therewith around the axis.
(8) In addition, the second engagement portion may be an inner peripheral surface of an inner hole of the expansively openable member, and the first engagement portion may be a second protruding portion protruding from the first end portion in the insertion direction and configured to be inserted in the inner hole of the expansively openable member and pressed against the inner peripheral surface. With this configuration, the first engagement portion and the second engagement portion are engaged with each other around the axis, and the first engagement portion and the second engagement portion have a role of preventing the expansively openable member from rotating.
(9) In addition, one of the first engagement portion and the second engagement portion may be at least one projection protruding from the first end portion in the insertion direction, and the other of the first engagement portion and the second engagement portion may be at least one recessed portion in which the projection can be inserted. Even with this configuration, it is possible to prevent appropriately the expansively openable member from rotating with respect to the tubular member.
(10) As another example of a configuration for engaging the first end portion with the second end portion, for example, an end surface of the first end portion and an end surface of the second end portion may each be an inclined surface inclined at a predetermined angle with respect to a surface that is perpendicular to an axial direction of the bolt main body. Even with this configuration, it is possible to prevent appropriately the expansively openable member from rotating with respect to the tubular member.
(11) A dividing line of the expansively openable member is formed to extend from a first line end portion that appears at one side of the expansively openable ring to a second line end portion that appears at the other side of the expansively openable ring, and the first line end portion and the second line end portion are separated from each other in the peripheral direction of the expansively openable member.
   The above-described configuration makes it possible for the expansively openable member to come in contact with and bite the inner side surface (inner wall) of the anchor hole over its peripheral entire area. As a result, it is possible to significantly enhance the pull-off strength of the anchor bolt.
(12) It is preferable that the tubular member is formed from a material containing as main component a synthetic resin that is lower in hardness than the expansively openable member, and the expansively openable member is formed from a material containing a metal as main component. With this configuration, a relatively large contact friction is generated between the first end portion of the tubular member and the second end portion of the expansively openable member in a state where the first end portion and the second end portion are abutting on each other. This further prevents the expansively openable member from rotating with respect to the tubular member.
(13) The tubular member includes at least one slit extending from the first end portion toward a side opposite to the insertion direction.
   With the above-described configuration, it is possible to provide flexibility to a part on the first end portion side of the tubular member. Accordingly, when the first end portion of the tubular member is strongly pressed by the expansively openable member having been pushed up by the push-in portion, the part on the first end portion side of the tubular member is bent radially outward. This makes it possible to prevent a damage, such as cracking, of the tubular member when being pushed up by the expansively openable member.
(14) The slit extends to a vicinity of a center of the tubular member. With this configuration, it is possible to provide flexibility to a part of the tubular member extending from the first end portion to the vicinity of the center.

### ADVANTAGEOUS EFFECTS OF THE INVENTION

According to the present disclosure, it is possible to enhance the pull-off strength of the anchor bolt by minimizing the noncontact part of the expansively openable member that is not in contact with the inner side surface (inner wall) of the anchor hole.

### BRIEF DESCRIPTION OF THE DRAWINGS

[FIG. 1] FIG. 1 is a perspective diagram showing an anchor bolt 11 according to a first embodiment of the present disclosure.
[FIG. 2] FIG. 2 is a perspective diagram showing the anchor bolt 11 according to the first embodiment of the present disclosure.
[FIG. 3A] FIG. 3A is a side diagram of the anchor bolt 11.
[FIG. 3B] FIG. 3B is a partial cross-sectional diagram of the anchor bolt 11.
[FIG. 4A] FIG. 4A is a diagram showing an expansively openable ring to be attached to the anchor bolt 11.
[FIG. 4B] FIG. 4B is a diagram showing the expansively openable ring to be attached to the anchor bolt 11.
[FIG. 5] FIG. 5 is a perspective diagram showing a sleeve to be attached to the anchor bolt 11.
[FIG. 6A] FIG. 6A is a diagram showing a process of inserting the anchor bolt 11 into an anchor hole.
[FIG. 6B] FIG. 6B is a diagram showing a state where the anchor bolt 11 has been inserted into the anchor hole.
[FIG. 6C] FIG. 6C is a diagram showing a fixed state where a nut of the anchor bolt 11 has been tightened and the construction is completed.
[FIG. 7A] FIG. 7A is a diagram showing a modification 1 of the expansively openable ring of the anchor bolt 11.
[FIG. 7B] FIG. 7B is a diagram showing a modification 2 of the expansively openable ring of the anchor bolt 11.
[FIG. 7C] FIG. 7C is a diagram showing a modification 3 of the expansively openable ring of the anchor bolt 11.
[FIG. 8] FIG. 8 is a partial cross-sectional diagram showing another working example of the anchor bolt 11.
[FIG. 9] FIG. 9 is a perspective diagram showing an anchor bolt 12 according to a second embodiment of the present disclosure.
[FIG. 10A] FIG. 10A is a side diagram of the anchor bolt 12.
[FIG. 10B] FIG. 10B is a partial cross-sectional diagram of the anchor bolt 12.
[FIG. 11A] FIG. 11A is a diagram showing a sleeve to be attached to the anchor bolt 12.
[FIG. 11B] FIG. 11B is a diagram showing the sleeve to be attached to the anchor bolt 12.
[FIG. 12A] FIG. 12A is a diagram showing a process of inserting the anchor bolt 12 into an anchor hole.
[FIG. 12B] FIG. 12B is a diagram showing a state where the anchor bolt 12 has been inserted into the anchor hole.
[FIG. 12C] FIG. 12C is a diagram showing a fixed state where a nut of the anchor bolt 12 has been tightened and the construction is completed.
[FIG. 13] FIG. 13 is a perspective diagram showing an anchor bolt 13 according to a third embodiment of the present disclosure.
[FIG. 14A] FIG. 14A is a side diagram of the anchor bolt 13.
[FIG. 14B] FIG. 14B is a partial cross-sectional diagram of the anchor bolt 13.
[FIG. 15A] FIG. 15A is a diagram showing a process of inserting the anchor bolt 13 into an anchor hole.
[FIG. 15B] FIG. 15B is a diagram showing a state where the anchor bolt 13 has been inserted into the anchor hole.
[FIG. 15C] FIG. 15C is a diagram showing a fixed state where a bolt of the anchor bolt 13 has been tightened and the construction is completed.
[FIG. 16] FIG. 16 is a perspective diagram showing an anchor bolt 14 according to a fourth embodiment of the present disclosure.
[FIG. 17A] FIG. 17A is a side diagram of the anchor bolt 14.
[FIG. 17B] FIG. 17B is a partial cross-sectional diagram of the anchor bolt 14, showing a cross-section of a cut surface XVIIB-XVIIB of FIG. 17A.
[FIG. 18] FIG. 18 is a perspective diagram showing a sleeve to be attached to the anchor bolt 14.
[FIG. 19] FIG. 19 is a perspective diagram showing the sleeve to be attached to the anchor bolt 14.
[FIG. 20] FIG. 20 is a partial cross-sectional diagram showing an anchor bolt 15 according to a fifth embodiment of the present disclosure.
[FIG. 21] FIG. 21 is a diagram for explaining another working example applied to each anchor bolt of the first to fifth embodiments.

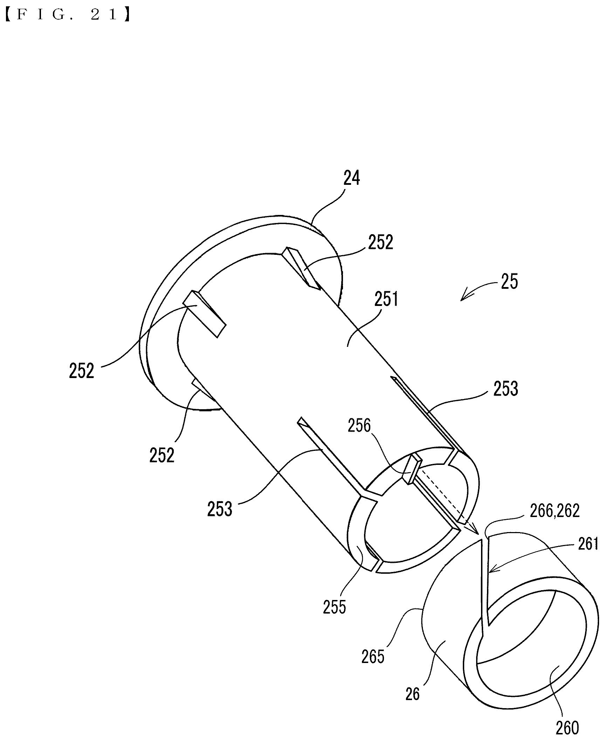

[FIG. 21] FIG. 21 is a diagram for explaining another working example applied to each anchor bolt of the first to fifth embodiments.

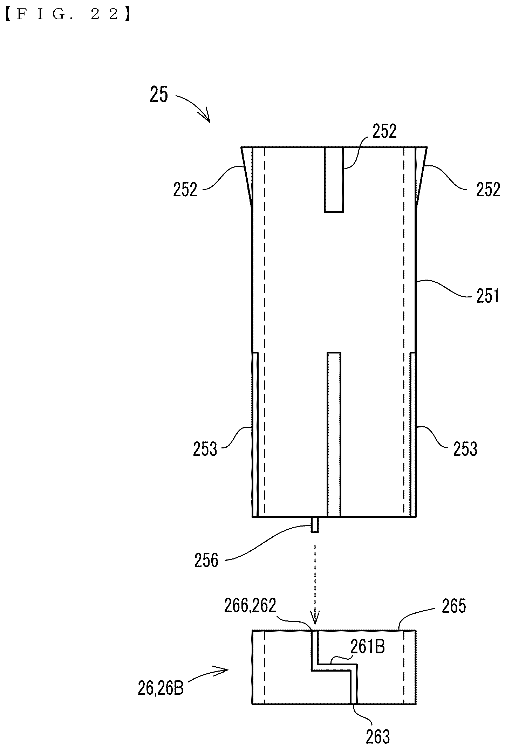

[FIG. 22] FIG. 22 is a diagram for explaining another working example applied to each anchor bolt of the first to fifth embodiments.

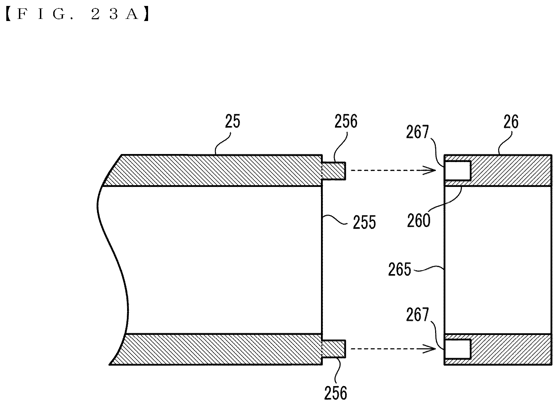

[FIG. 23A] FIG. 23A is a diagram for explaining another working example applied to each anchor bolt of the first to fifth embodiments.

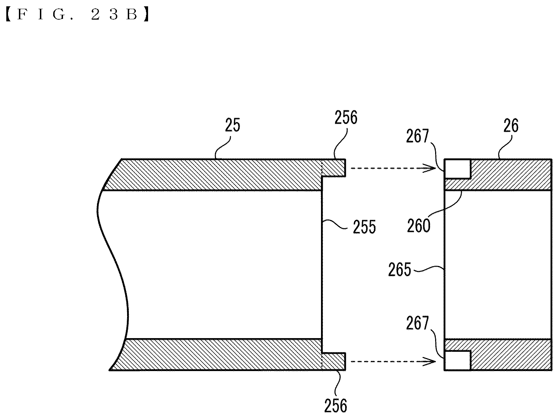

[FIG. 23B] FIG. 23B is a diagram for explaining another working example applied to each anchor bolt of the first to fifth embodiments.

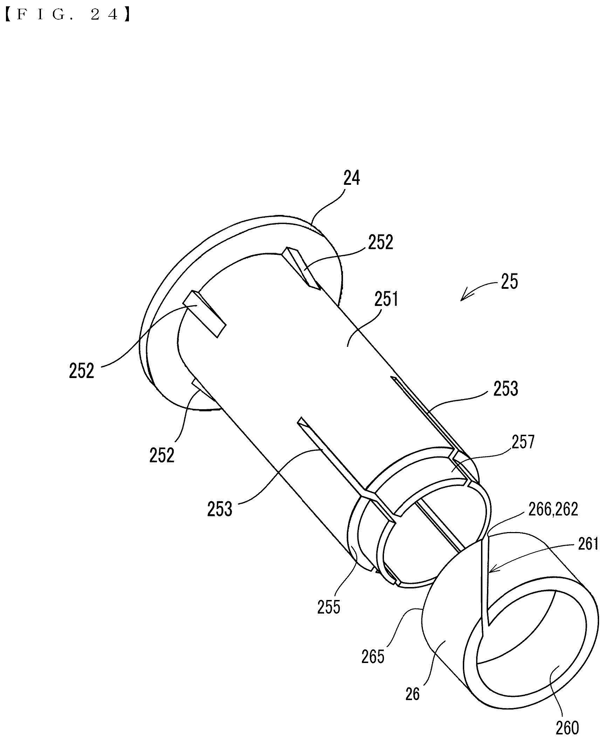

[FIG. 24] FIG. 24 is a diagram for explaining another working example applied to each anchor bolt of the first to fifth embodiments.

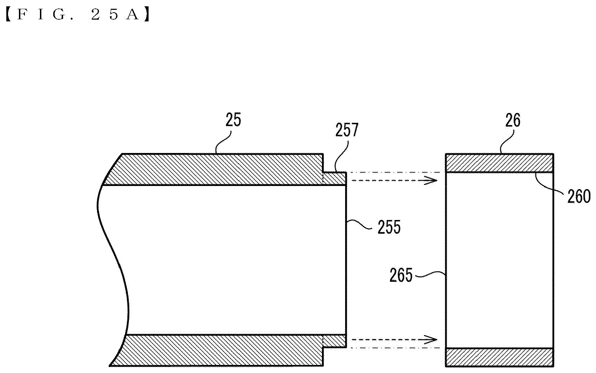

[FIG. 25A] FIG. 25A is a diagram for explaining another working example applied to each anchor bolt of the first to fifth embodiments.

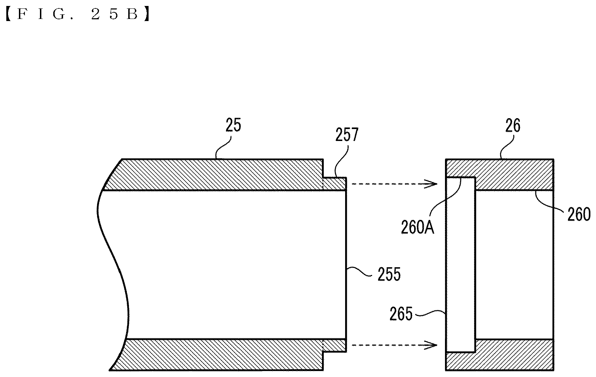

[FIG. 25B] FIG. 25B is a diagram for explaining another working example applied to each anchor bolt of the first to fifth embodiments.

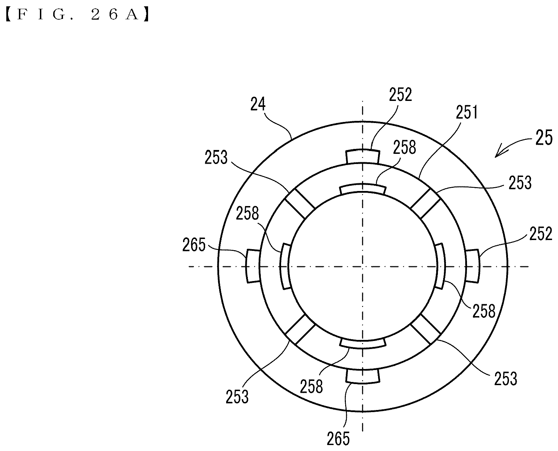

[FIG. 26A] FIG. 26A is a diagram for explaining another working example applied to each anchor bolt of the first to fifth embodiments.

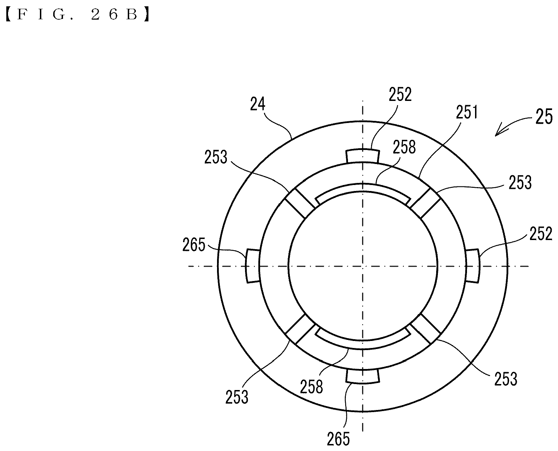

[FIG. 26B] FIG. 26B is a diagram for explaining another working example applied to each anchor bolt of the first to fifth embodiments.

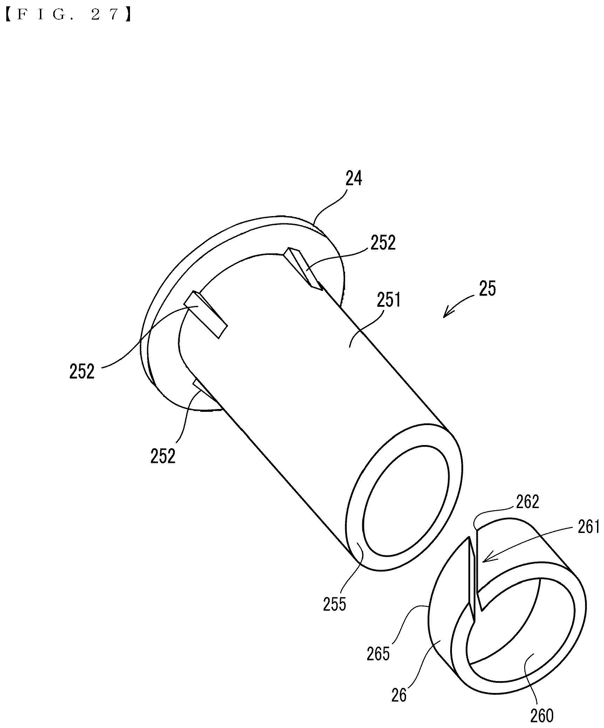

[FIG. 27] FIG. 27 is a diagram for explaining another working example applied to each anchor bolt of the first to fifth embodiments.

### DESCRIPTION OF EMBODIMENTS

The following describes embodiments of the present disclosure with reference to the accompanying drawings. It should be noted that the following embodiments are examples of specific embodiments of the present disclosure and should not limit the technical scope of the present disclosure.

### [First embodiment]

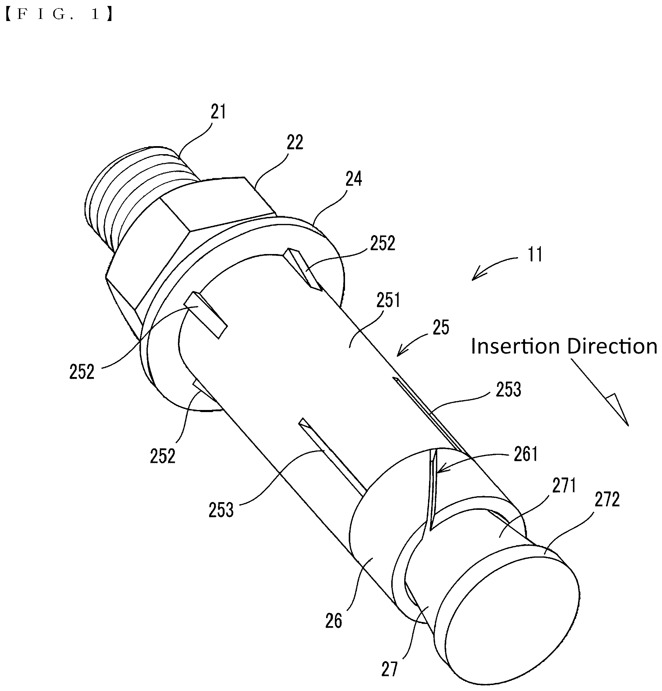

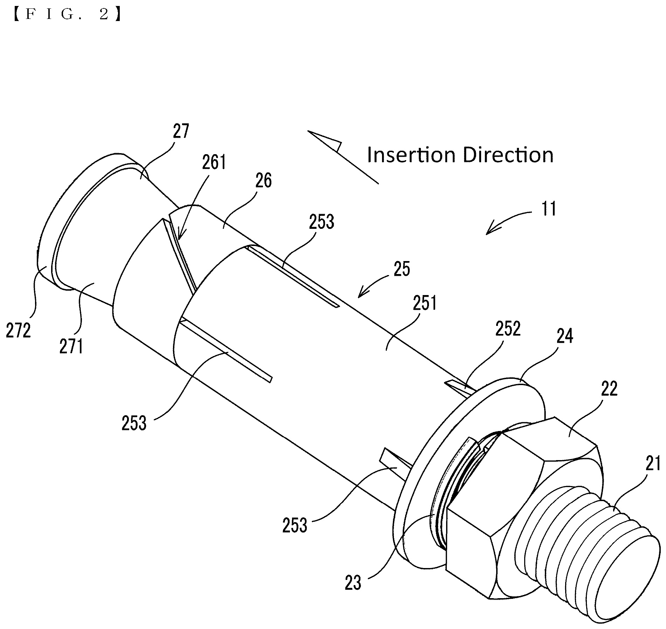

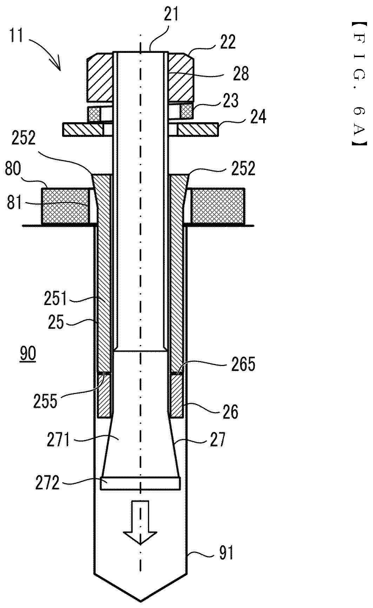

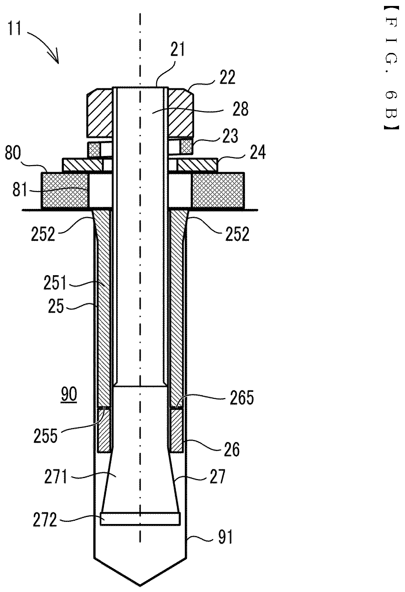

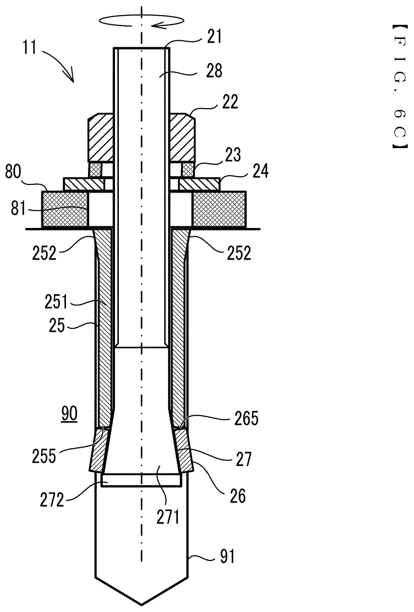

FIG. 1 and FIG. 2 are perspective diagrams showing an anchor bolt 11 according to a first embodiment of the present disclosure. The anchor bolt 11 of the present embodiment is a bolt that is what is called a post-constructed anchor that is attached to a skeleton 90 (see FIG. 6) such as cured mortar or concrete. It is noted that the skeleton 90 to which the anchor bolt 11 is constructed may be a ceiling, a side wall, or a floor surface. In addition, the skeleton 90 is not limited to an artificial skeleton such as concrete, but may be, for example, bedrock.

As shown in FIG. 1 and FIG. 2, the anchor bolt 11 includes a taper bolt 21 (an example of a bolt main body of the present disclosure), a nut 22, a spring washer 23 (see FIG. 2), a flat washer 24, a sleeve 25 (an example of a tubular member of the present disclosure), an expansively openable ring 26 (an example of an expansively openable member of the present disclosure), and a cone portion 27 (an example of a push-in portion of the present disclosure). It is noted that the nut 22, the spring washer 23, and the flat washer 24 are not essential constituent elements of the anchor bolt of the present disclosure but are elements necessary for the attachment construction of the anchor bolt 11.

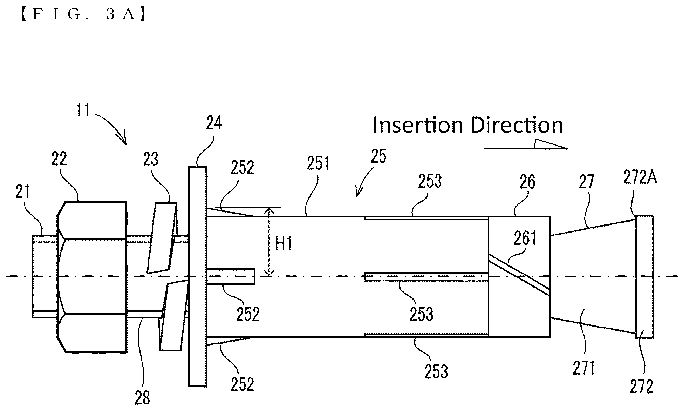

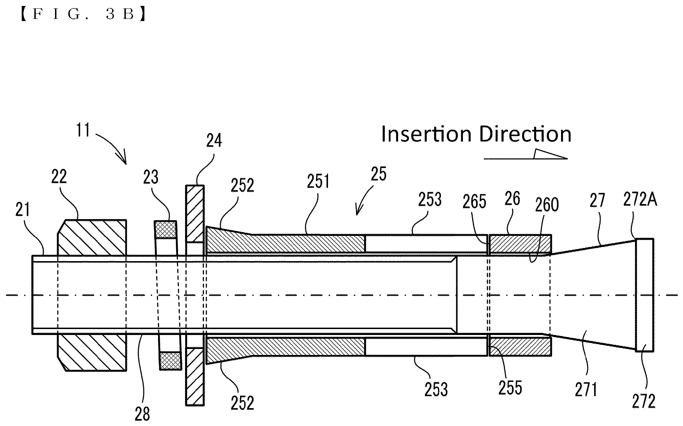

FIG. 3A and FIG. 3B are diagrams showing a configuration of the anchor bolt 11. FIG. 3A is a side diagram, and FIG. 3B is a partial cross-sectional diagram. FIG. 3B shows a cross-sectional structure of members other than a taper bolt 21.

As shown in FIG. 3A and FIG. 3B, the taper bolt 21 is a bolt with a male screw formed on its outer peripheral surface, and its tip is integrally formed with the cone portion 27. The male screw is formed from a top toward the tip of the taper bolt 21. In a case where the anchor bolt 11 is constructed in an anchor hole 91 (see FIG. 6) formed in the skeleton 90, a part of a top side of the taper bolt 21 is exposed to outside, and a tip side of the taper bolt 21 is inserted into the anchor hole 91 (see FIG. 6) formed in the skeleton 90.

The taper bolt 21 is formed from a steel material such as carbon steel or stainless steel. It is noted that when the taper bolt 21 is formed from carbon steel containing iron as main component, it may be treated with hot dip galvanizing to be prevented from rusting or corrosion. The taper bolt 21 is formed from a material that is higher in hardness than the expansively openable ring 26 described below, and is preferably formed from a metal material containing a metal, such as iron, as main component. It is noted that in a case where the skeleton 90 is formed from, for example, wood or gypsum, not from a hard material such as cured mortar or concrete, the taper bolt 21 may be formed from a well-known synthetic resin.

The cone portion 27 is configured to expand the expansively openable ring 26 radially outward by being pushed into an inner hole 260 of the expansively openable ring 26, and is formed in an approximately truncated cone shape. The cone portion 27 is formed in shape widening toward a tip of the taper bolt 21 such that the outer diameter of a part having the minimum diameter of an outer peripheral surface 271 of the cone portion 27 is smaller than the inner diameter of the expansively openable ring 26, and the outer diameter of a part having the maximum diameter of the outer peripheral surface 271 is larger than the inner diameter of the expansively openable ring 26.

A tip side of the cone portion 27 is integrally formed with a protruding portion 272 of an annular shape that protrudes radially outward from the outer peripheral surface 271 of the cone portion 27. For this reason, a step 272A is formed between the outer peripheral surface 271 and the protruding portion 272. Since the cone portion 27 is inserted in the anchor hole 91 during the attachment construction of the anchor bolt 11, the outer diameter of the protruding portion 272 is smaller than the inner diameter of the anchor hole 91. That is, the anchor hole 91 formed in the skeleton 90 has a prescribed size that is larger than the maximum diameter of the cone portion 27 (the outer diameter of the protruding portion 272).

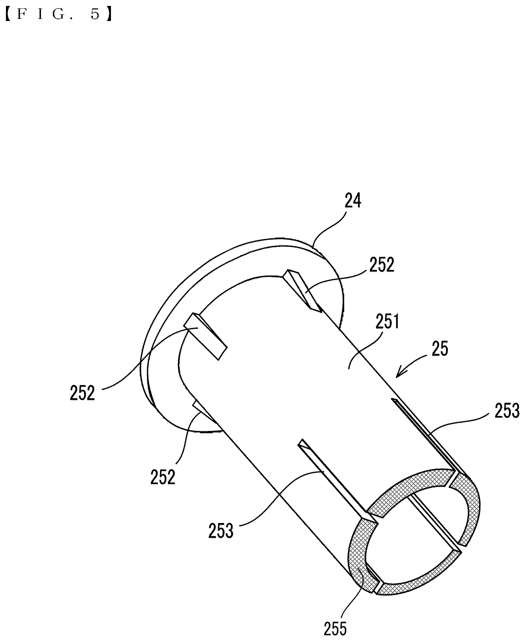

FIG. 5 is a perspective diagram showing a configuration of the sleeve 25. As shown in FIG. 5, the sleeve 25 is a tubular member formed in an approximately cylindrical shape. The sleeve 25 is attached to the taper bolt 21. Specifically, the screw portion 28 of the taper bolt 21 is inserted into an inner hole of the sleeve 25, and in this state, the flat washer 24 and the spring washer 23 are sequentially inserted onto a top side of the screw portion 28, and further the nut 22 is screwed onto the screw portion 28. The inner diameter of the inner hole of the sleeve 25 is slightly larger than the outer diameter of the screw portion 28 and the minimum diameter of the cone portion 27, and smaller than the maximum diameter of the cone portion 27.

The sleeve 25 is formed from a material that is lower in hardness than the cone portion 27 and the expansively openable ring 26. In the present embodiment, the sleeve 25 is formed from a synthetic resin that is lower in hardness than the cone portion 27 and the expansively openable ring 26 formed from a steel material. In the present embodiment, the sleeve 25 is manufactured by forming the synthetic resin with a mold. Examples of the synthetic resin include polyethylene, polypropylene, polystyrene, ABS resin, acrylic resin, polyvinyl chloride, polyamide, polyacetal, polycarbonate, polyethylene terephthalate (PET resin), and a synthetic resin containing one or more of these as its main component(s). These synthetic resins are lower in hardness than the skeleton 90, namely, are lower in hardness than an inner wall of the anchor hole 91 formed in the skeleton 90 that is concrete or the like.

It is noted that the sleeve 25 is not limited to one formed from a synthetic resin, but may be formed from a metal material such as: a metal such as aluminum or copper that is lower in hardness than the cone portion 27 and the expansively openable ring 26; or an alloy containing the metal as its main component. In addition, when the sleeve 25 is formed from the metal material, the metal material is preferably lower in hardness than the inner wall of the anchor hole 91 formed in the skeleton 90.

The sleeve 25 includes: a tube main body portion 251 (an example of a tube main body portion of the present disclosure) formed in a cylindrical shape; one or more locking pieces 252 (an example of a locking portion of the present disclosure); and one or more slits 253 (an example of a slit of the present disclosure). These portions are integrally formed with the sleeve 25.

The locking pieces 252 are configured to be, in a state where the anchor bolt 11 is inserted in the anchor hole 91 of the prescribed size and is disposed inside the anchor hole 91, locked to an inner side surface of the anchor hole 91. The locking pieces 252 are inclined ribs provided at a top-side end portion of the tube main body portion 251, and protruding perpendicularly from the peripheral surface of the tube main body portion 251. The locking pieces 252 extend from a top-side end surface of the tube main body portion 251 (left side of FIG. 3A) toward a tip side (right side of FIG. 3B) opposite thereto along the axial direction of the anchor bolt. The locking pieces 252 are inclined such that they are highest at a top side of the tube main body portion 251 and are low at a tip side.

In the present embodiment, four locking pieces 252 are formed on the outer peripheral surface of the tube main body portion 251, and are arranged at equal intervals in the peripheral direction. A length H1 (see FIG. 3A) between the center of the tube main body portion 251 and the locking pieces 252 is longer than the radius of the anchor hole 91. That is, the inner diameter of the anchor hole 91 is smaller than the diameter of a circle that passes a top of each sleeve 25, and larger than the maximum diameter of the taper bolt 21 (the outer diameter of the protruding portion 272). As a result, when the anchor bolt 11 is inserted and pushed into the anchor hole 91, the four locking pieces 252 come in contact with and press the inner side surface of the anchor hole 91. This causes the sleeve 25 to be fixed in the anchor hole 91 in such a way as not to slip out and not to rotate in the anchor hole 91 in the peripheral direction.

It is noted that the number of the locking pieces 252 is not limited to four. The number of the locking pieces 252 may be two or three, or may be five or more. In addition, although the locking pieces 252 have been explained as one example of the locking portion of the present disclosure, the locking portion of the present disclosure is not limited to the locking pieces 252. For example, the locking pieces 252 may be projections that protrude perpendicularly from the peripheral surface of the tube main body portion 251. In addition, instead of the locking pieces 252, an annular inclined portion formed continually in the peripheral direction on the outer peripheral surface of the tube main body portion 251 may be applied.

The expansively openable ring 26 is attached to the taper bolt 21 more on the insertion direction side of the anchor bolt 11 than the sleeve 25. Accordingly, as shown in FIG. 3B, the expansively openable ring 26 is disposed between the sleeve 25 and the cone portion 27 on the taper bolt 21.

The expansively openable ring 26 is a member that is expanded radially outward when the cone portion 27 is inserted in the inner hole 260 of the anchor bolt 11 during the attachment construction of the anchor bolt 11. In the present embodiment, the expansively openable ring 26 is expanded to be larger in size than the inner diameter of the anchor hole 91. With this configuration, when the expansively openable ring 26 is expanded, the peripheral surface of the expansively openable ring 26 is pressed against the inner wall surface of the anchor hole 91, and when the expansively openable ring 26 is further expanded, the expansively openable ring 26 bites into the inner wall surface.

The expansively openable ring 26 is an annularly formed member. The expansively openable ring 26 is formed from a steel material such as carbon steel or stainless steel. The expansively openable ring 26 is inserted onto the taper bolt 21 to be closer to the tip side than the sleeve 25.

The inner diameter of the expansively openable ring 26 before expansion is formed to be as large in size as can be inserted onto the taper bolt 21. In the present embodiment, the size of the inner diameter of the expansively openable ring 26 before expansion is approximately the same in size as the inner diameter of the sleeve 25, slightly larger than the outer diameter of the screw portion 28 of the taper bolt 21 and the minimum diameter of the cone portion 27, and smaller than the maximum diameter of the cone portion 27. In a state where the expansively openable ring 26 is attached to the taper bolt 21, the sleeve 25 is inserted onto the screw portion 28 of the taper bolt 21. It is noted that the inner diameter of the expansively openable ring 26 may be different from the inner diameter of the sleeve 25 as far as the expansively openable ring 26 can be inserted onto the screw portion 28, and as far as it is slightly larger than the minimum diameter of the cone portion 27 and smaller than the maximum diameter of the cone portion 27.

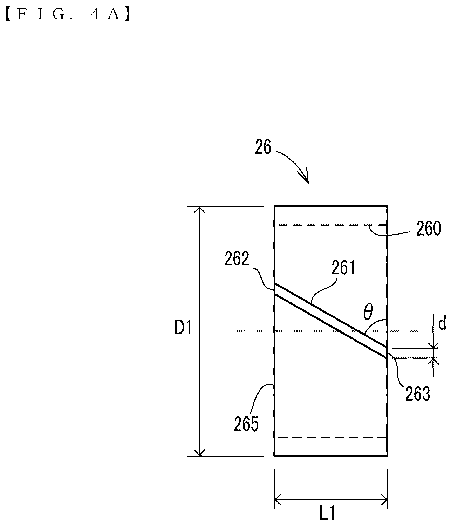

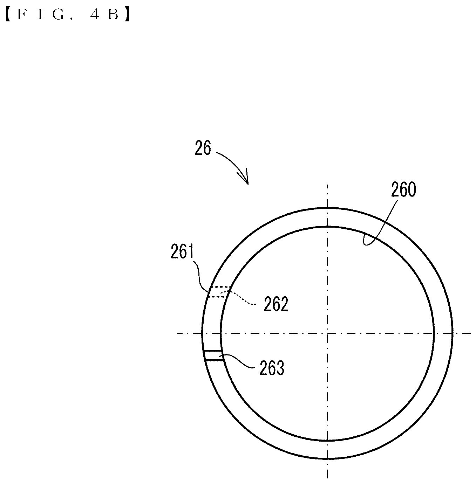

FIG. 4A and FIG. 4B are diagrams showing the expansively openable ring 26 before expansion. As shown in FIG. 4A and FIG. 4B, the expansively openable ring 26 is an annular member, and specifically is a cylindrical member of which a height size L1 in a center axis direction is relatively small with respect to an outer diameter D1 of the expansively openable ring 26. In the present embodiment, the height size L1 of the expansively openable ring 26 is set to a length that is approximately 0.4 to 0.5 times the outer diameter D1, more preferably set to a length that is approximately 0.2 to 0.3 times the outer diameter D1. It is noted that the height size L1 of the expansively openable ring 26 only needs to be smaller than the outer diameter D1, preferably equal to or smaller than a size that is 0.5 times the outer diameter D1.

The expansively openable ring 26 is not an annular member that completely continues in the peripheral direction, but is divided in the peripheral direction by a slit 261 (an example of a dividing slit and a dividing line of the present disclosure) of a predetermined width d. In other words, the expansively openable ring 26 includes the slit 261 that divides the member in the peripheral direction. The slit 261 is spread when the anchor bolt 11 is fixed to the anchor hole 91. It is noted that the expansively openable ring 26 is not limited to the configuration where it is completely divided in the peripheral direction by the slit 261. For example, a central part or an end part of the slit 261 may be partially connected, and the connected portion may be divided when the cone portion 27 is pushed therein. That is, the expansively openable ring 26 may be substantially divided in the peripheral direction by the slit 261, while being partially connected so as to be cuttable.

The expansively openable ring 26, for example, may be formed by cutting an outer peripheral wall of an annular cylindrical member. In this case, the cut line becomes the slit 261. In addition, the expansively openable ring 26 may be formed by bending a plate-like or bar-like member by using a bending device or the like. In this case, a part where ends of the member have been joined becomes the slit 261.

The size of the width d of the slit 261 is not particularly limited. As described below, the slit 261 is spread during the construction of the anchor bolt 11. As a result, the width d may be substantially zero before the construction.

In the present embodiment, the slit 261 of the expansively openable ring 26 is inclined in a state (the state shown in FIG. 4A) where the expansively openable ring 26 is viewed from a side. That is, the slit 261 diagonally extends from a first end portion 262 (an example of a first line end portion of the present disclosure) that appears at one side (the left side of FIG. 4A) of the expansively openable ring 26 to a second end portion 263 (an example of a second line end portion of the present disclosure) that appears at the other side (the right side of FIG. 4A). Accordingly, the first end portion 262 and the second end portion 263 are separated from each other in the peripheral direction of the expansively openable ring 26.

It is noted that the expansively openable ring 26 is not limited to a cylindrical member. For example, it may be an annular ring member whose cross-sectional shape is circular, oval, polygonal, square, equilateral triangular, or the like.

An inclination angle θ of the slit 261 only needs to be set to an angle where, as shown in FIG. 4B, the first end portion 262 and the second end portion 263 do not overlap with each other when viewed from the axial direction of the expansively openable ring 26 in a state where the expansively openable ring 26 has been expanded after the attachment construction of the anchor bolt 11. The inclination angle θ as such is determined by the width of the expansively openable ring 26, an outer diameter of the expanded expansively openable ring 26, or the like.

As shown in FIG. 3B and FIG. 5, the slits 253 each having a predetermined width are formed in the sleeve 25. The slits 253 extend straight from a tip-side end portion of the tube main body portion 251 towards the top of the anchor bolt 11. In the present embodiment, the slits 253 extend to a vicinity of the center of the tube main body portion 251. In addition, in the present embodiment, four slits 253 are formed in the sleeve 25 and arranged at equal intervals in the peripheral direction. With the slits 253 formed as such, it is possible to provide flexibility to tip-side parts of the tube main body portion 251.

It is noted that the number of the slits 253 is not limited to four. The number of the slits 253 may be two or three, or may be five or more. In addition, the slits 253 may extend in a direction that is inclined with respect to a center axis of the sleeve 25.

Meanwhile, to construct the anchor bolt 11 in the anchor hole 91, the constructor inserts the anchor bolt 11 into the anchor hole 91, and then the constructor tightens the nut 22 by a predetermined torque by using an electric or air driving impact wrench or the like. In this case, the taper bolt 21 is pulled up as the nut 22 is tightened, and during this pull-up process, the taper bolt 21 and the nut 22 may be rotated in the same direction due to a friction between the male screw of the taper bolt 21 and the female screw of the nut 22. At this time, the cone portion 27 has been pushed into and come in contact with the inner hole 260 of the expansively openable ring 26. As a result, a friction also occurs to a contact part between the outer peripheral surface 271 of the cone portion 27 and the expansively openable ring 26. The force of this friction may cause the expansively openable ring 26 to rotate in the same direction as that of the nut 22 and the taper bolt 21. In this case, the nut 22, the taper bolt 21, and the expansively openable ring 26 idle integrally in the anchor hole 91, obstructing the anchor bolt 11 from being fixed to the anchor hole 91.

In order to solve the above-mentioned problem, in the present embodiment, as shown in FIG. 5, an end surface (the hatched portion in FIG. 5) of a tube end portion 255 (an example of a first end portion of the present disclosure) located on the insertion direction side of the sleeve 25 is formed as an uneven surface so that a predetermined contact friction is generated between the tube end portion 255 and a ring end portion 265 (an example of a second end portion of the present disclosure) located on a side of the expansively openable ring 26 opposite to the insertion direction.

For example, uneven surface machining is applied so that minute unevenness is formed on the end surface of the tube end portion 255. The end surface of the tube end portion 255 can be formed as an uneven surface by, in a mold for forming the sleeve 25, making a part forming the tube end portion 255 in an uneven shape. In addition, after the sleeve 25 is molded by a mold, uneven surface machining such as knurling may be applied to the end surface of the tube end portion 255. The uneven shape of the end surface of the tube end portion 255 may be irregular uneven shape, or may be formed such that the uneven shape has a straight pattern, a twill pattern, an oblique pattern, a cross pattern, or a diamond pattern.

With the end surface of the tube end portion 255 being an uneven surface as described above, when the tube end portion 255 of the sleeve 25 abuts strongly on the ring end portion 265 of the expansively openable ring 26 during construction of the anchor bolt 11, a relatively large contact friction (frictional force) occurs between each end portion. The contact friction occurring at this time is larger than a frictional force that occurs to the contact part between the outer peripheral surface 271 of the cone portion 27 and the expansively openable ring 26 during the construction. That is, the end surface of the tube end portion 255 is machined to an uneven surface having a predetermined unevenness so that the contact friction is larger than the frictional force that occurs to the contact part between the outer peripheral surface 271 and the expansively openable ring 26. Accordingly, the contact friction has a role of preventing the expansively openable ring 26 from sliding or rotating with respect to the sleeve 25.

With the above-described configuration, during construction of the anchor bolt 11 in the anchor hole 91, if the taper bolt 21 and the female screw of the nut 22 rotate in the same direction, and the expansively openable ring 26 tries to rotate in the same direction, a contact friction larger than the frictional force generated at the contact part between the expansively openable ring 26 and the cone portion 27 is generated between the tube end portion 255 and the ring end portion 265. This prevents the expansively openable ring 26 from rotating, further preventing rotation of the taper bolt 21. As a result, the taper bolt 21 is pulled up surely as the nut 22 is tightened, making it possible for the cone portion 27 to expansively open the expansively openable ring 26 appropriately. That is, it is possible to prevent idling of the anchor bolt 11 in the anchor hole 91, remarkably improving the workability of the anchor bolt 11.

It is noted that although the present embodiment shows as one example a configuration where the end surface of the tube end portion 255 is formed as an uneven surface, for example, only an end surface of the ring end portion 265 may be formed as an uneven surface. Alternatively, to cause a still larger contact friction, both end surfaces of the tube end portion 255 and the ring end portion 265 may be formed as uneven surfaces.

In addition, although the present embodiment shows as one example a configuration where the end surface of the tube end portion 255 or the end surface of the ring end portion 265 is formed as an uneven surface, for example, high-friction coating may be applied to either or both of these end surfaces. The high-friction coating may be, for example: a process of coating a resin film, such as urethane, having a high viscosity; or a process of applying a paint having a high viscosity. Even with such a configuration, it is possible to cause a relatively large contact friction between the end surface of the tube end portion 255 and the end surface of the ring end portion 265 during construction of the anchor bolt 11.

It is noted that not limited to the above-described configurations, any configuration may be adopted as far as it causes a relatively large contact friction to be generated between the end surface of the tube end portion 255 and the end surface of the ring end portion 265 during construction of the anchor bolt 11.

The following describes an attachment structure of the anchor bolt 11 with reference to FIG. 6A to FIG. 6C. Here, FIG. 6A is a diagram showing a state where the sleeve 25 of the anchor bolt 11 is inserted in the anchor hole 91, FIG. 6B is a diagram showing a state where the nut 22 is screw-fitted to the anchor bolt 11, and FIG. 6C is a diagram showing a fixed state where the nut 22 of the anchor bolt 11 has been tightened and the attachment construction is completed. It is noted that the slits 253 are omitted in FIG. 6A to FIG. 6C.

To construct the anchor bolt 11, first, beforehand, the constructor needs to form the anchor hole 91 in the skeleton 90. After the anchor hole 91 is formed in the skeleton 90 and its interior is cleaned, the constructor inserts the anchor bolt 11 with the nut 22 and the washers 23 and 24 attached thereto, into an attachment hole 81 of a structural member 80, and into the anchor hole 91 (see FIG. 6A). At this time, the constructor pushes the sleeve 25 into the anchor hole 91 until the upper end of the sleeve 25 becomes flush with the surface of the skeleton 90 (see FIG. 6B). This allows the locking pieces 252 of the sleeve 25 to be pressed against the inner surface of the anchor hole 91, and the sleeve 25 is fixed in the anchor hole 91. At this point in time, a part of the screw portion 28 of the taper bolt 21 protrudes outside from the skeleton 90.

It is noted that since, as described above, the sleeve 25 is formed from a synthetic resin, not from a metal, the sleeve 25 can be pushed into the anchor hole 91 with a weaker force than one made from a metal is. In addition, when the locking pieces 252 of the sleeve 25 are pressed against the inner wall surface of the anchor hole 91, the locking pieces 252 are collapsed, and thereby the sleeve 25 is fixed in the anchor hole 91. As a result, an extremely smaller load is applied by this to the inner wall surface of the anchor hole 91 than by a conventional one made from a metal. As a result, it is possible to prevent a crack from occurring in the inner wall surface of the anchor hole 91 when the sleeve 25 is inserted therein.

Subsequently, the constructor tightens the nut 22 by a predetermined torque by using an electric or air driving impact wrench or the like (see FIG. 6C). This allows only the taper bolt 21 to be pulled up, and inside the anchor hole 91, the cone portion 27 is pulled up together with the taper bolt 21. As the cone portion 27 is pulled up, the cone portion 27 is pressed into the inner hole 260 of the expansively openable ring 26. This causes the expansively openable ring 26 to be expanded radially outward by the inclination of the outer peripheral surface 271 of the cone portion 27 (see FIG. 6C). The expanded expansively openable ring 26 bites into the inner wall surface of the anchor hole 91 and is fixed therein. This causes the anchor bolt 11 to be fixed in the anchor hole 91. In addition, tightening the nut 22 causes the structural member 80 to be firmly attached to the skeleton 90 by the anchor bolt 11.

With the above-described configuration of the anchor bolt 11 of the present embodiment, the outer peripheral surface of the expansively openable ring 26 expanded by the cone portion 27 comes in contact with the inner wall surface of the anchor hole 91, and the expansively openable ring 26 bites into the inner wall surface. At this time, the cone portion 27 is pressed into the inner hole, and the slit 261 is spread. However, since the slit 261 diagonally extends, the expansively openable ring 26 contacts the inner wall surface of the anchor hole 91 continually in the peripheral direction. That is, the outer peripheral surface of the expansively openable ring 26 and the inner wall surface come in contact with each other over the whole range of 360 degrees of the inner wall surface (the whole range of the peripheral direction), and in this range, there is no noncontact part where the outer peripheral surface of the expansively openable ring 26 and the inner wall surface are not in contact with each other. This enhances the pull-off strength of the anchor bolt 11 after the construction.

In addition, since at least the end surface of the tube end portion 255 is formed as an uneven surface, a contact friction larger than a contact friction between the expansively openable ring 26 and the cone portion 27 is generated between the tube end portion 255 and the ring end portion 265 during construction of the anchor bolt 11. This prevents the expansively openable ring 26 from sliding and rotating with respect to the sleeve 25, and further prevents the taper bolt 21 from rotating. As a result, it is possible to prevent the anchor bolt 11 from idling in the anchor hole 91 when the nut 22 is tightened, remarkably improving the workability of the anchor bolt 11.

In addition, the cone portion 27 includes the protruding portion 272. Accordingly, when the anchor bolt 11 is pulled up and the protruding portion 272 of the cone portion 27 abuts on the tip-side end portion of the expansively openable ring 26, the expansion of the expansively openable ring 26 by the outer peripheral surface 271 of the cone portion 27 stops. That is, the expansively openable ring 26 is restricted from being further expanded radially outward. Since the protruding portion 272 as such is provided, even when the tightening torque of the nut 22 is smaller than the setting torque of the impact wrench or the like in a state where the expansively openable ring 26 has been expanded to the maximum by the outer peripheral surface 271 of the cone portion 27, the protruding portion 272 abuts on the end portion of the expansively openable ring 26, thereby increasing the tightening torque. This allows the tightening torque to exceed the setting torque, causing the tightening of the nut 22 by the impact wrench or the like to stop, and the expansively openable ring 26 is restricted from being further expanded. As a result, the expansively openable ring 26 is prevented from excessively biting into the inner wall of the anchor hole 91, making it possible to prevent cracking of the skeleton 90 due to excessive biting.

In addition, since the sleeve 25 is formed from a material, specifically the above-described synthetic resin, that is lower in hardness than the inner wall of the anchor hole 91 formed in the skeleton 90, the constructor can easily attach the sleeve 25 to the anchor hole 91 without strongly striking the taper bolt 21 into the anchor hole 91 with a hammer. In addition, since it is possible to fix the structural member 80 to the anchor bolt 11 only by tightening the nut 22 with an impact wrench or the like, the workability is improved.

In addition, since the locking pieces 252 apply only a very small load to the inner wall surface of the anchor hole 91 when the anchor bolt 11 is inserted, it is prevented that, as in a conventional product, a metal part of the outer peripheral surface bites into the inner wall surface of the anchor hole 91 to cause a crack in the inner wall surface. In addition, since a small load is applied to the inner wall surface, it is possible to construct the anchor bolt 11 at a position close to an edge of the skeleton 90, compared to a conventional product.

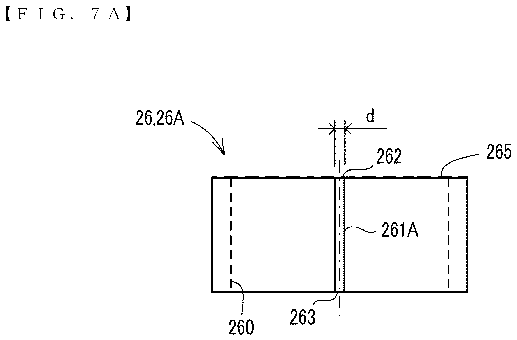

It is noted that although the above-described embodiment describes an example where the slit 261 of the expansively openable ring 26 diagonally extends, the shape of the slit 261 is not limited to the one in this example. For example, an expansively openable ring 26A may be applied which is, as shown in FIG. 7A, divided by a slit 261A that extends straight in parallel with the center axis of the expansively openable ring 26. In this case, although the expansively openable ring 26A after the expansion has a part, the slit 261A having the width d, that is not in contact with the inner wall of the anchor hole 91, it has very little noncontact part compared to one having a conventional structure. That is, it has much more part that bites in the peripheral direction compared to a conventional one. Accordingly, even the expansively openable ring 26A of this configuration can enhance the pull-off strength of the anchor bolt 11 after construction.

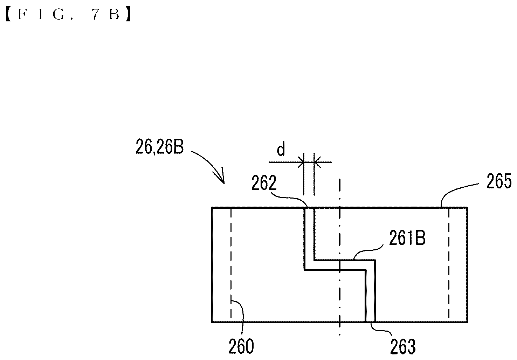

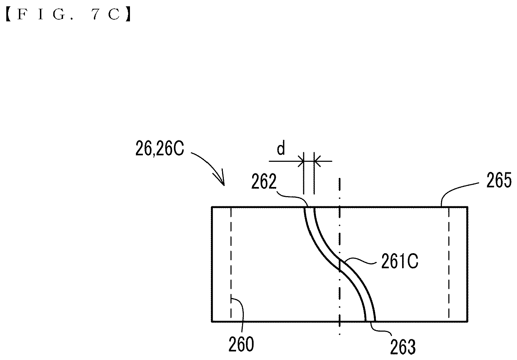

In addition, an expansively openable ring 26B (see FIG. 7B) or an expansively openable ring 26C (see FIG. 7C) may be applied in place of the expansively openable ring 26. As shown in FIG. 7B, the expansively openable ring 26B has a configuration of being divided in the peripheral direction by a slit 261B that has one or more bending points. In addition, for example, the slit 261B includes: a part formed to extend straight from the ring end portion 265 of the expansively openable ring 26B in parallel with the center axis; a part extending in the peripheral direction of the expansively openable ring 26B; and a part formed to extend straight again. In addition, as shown in FIG. 7C, the expansively openable ring 26C has a configuration of being divided by a slit 261C that is curved in the shape of letter S. In either the expansively openable ring 26B or 26C, the first end portion 262 and the second end portion 263 are separated from each other in the peripheral direction of the expansively openable ring 26 (26B, 26C). Even with a configuration as such, the outer peripheral surface of the expansively openable ring 26B, 26C comes in contact with the inner wall surface of the anchor hole 91 continually in the peripheral direction. This enhances the pull-off strength of the anchor bolt 11 after construction.

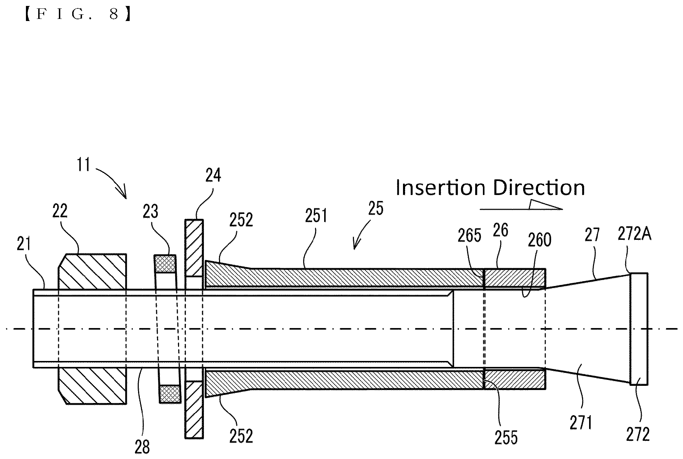

In addition, the sleeve 25 of the anchor bolt 11 may not necessarily include the slits 253, and even the anchor bolt 11 attached with the sleeve 25 not including the slits 253 as shown in FIG. 8 can improve the workability and enhance the pull-off strength of the anchor bolt 11 after construction.

In addition, the peripheral surface of the expansively openable ring 26 is not limited to a surface that is flat in the peripheral direction. For example, a plurality of projections may be formed scattered in the peripheral direction on the peripheral surface of the expansively openable ring 26. In addition, one or more saw-tooth shaped ribs extending in the peripheral direction may be formed on the peripheral surface of the expansively openable ring 26. With such projections or ribs formed on the peripheral surface of the expansively openable ring 26, even when the expansively openable ring 26 does not bite into the inner wall surface of the anchor hole 91, the projections or the ribs of the expansively openable ring 26 surely bite into the inner wall surface. This allows the anchor bolt 11 to be surely fixed in the anchor hole 91.

In addition, although the above-described embodiment shows as one example a configuration where the sleeve 25 and the expansively openable ring 26 are formed from different materials, for example, in a case where it is configured such that a relatively large contact friction occurs between the end surface of the tube end portion 255 and the end surface of the ring end portion 265, the sleeve 25 and the expansively openable ring 26 may be formed from a same material.

It is noted that the above-described modifications and working examples of the first embodiment may be applied to second, third, fourth, and fifth embodiments described below.

### [Second embodiment]

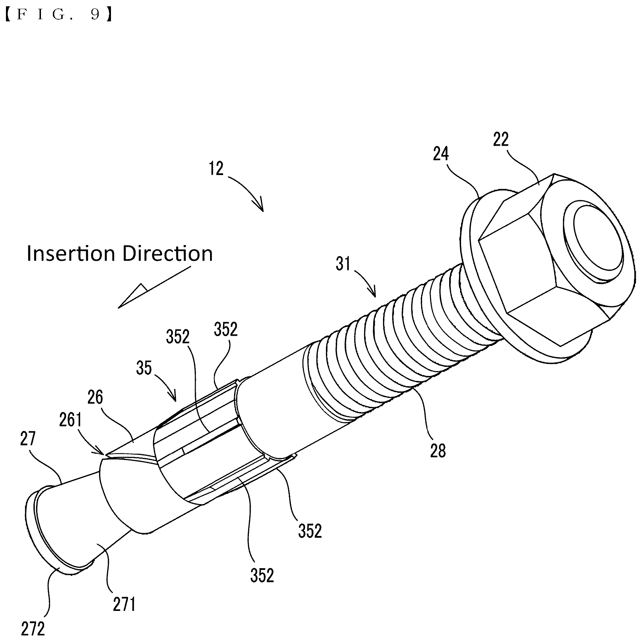

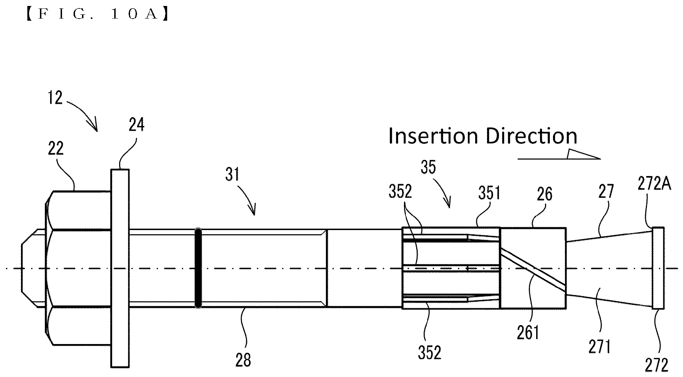

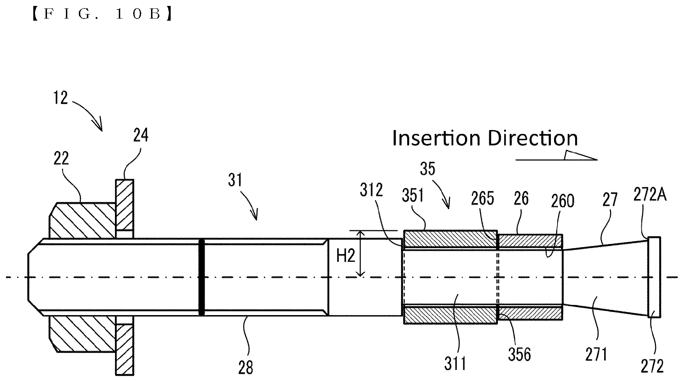

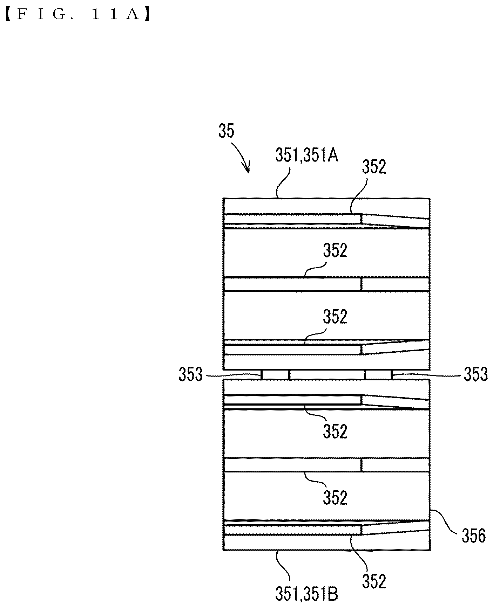

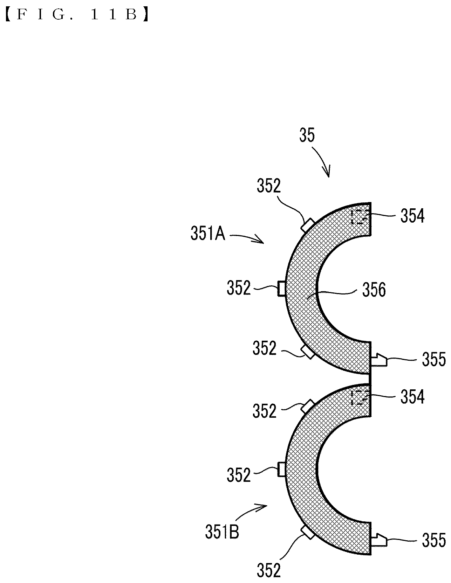

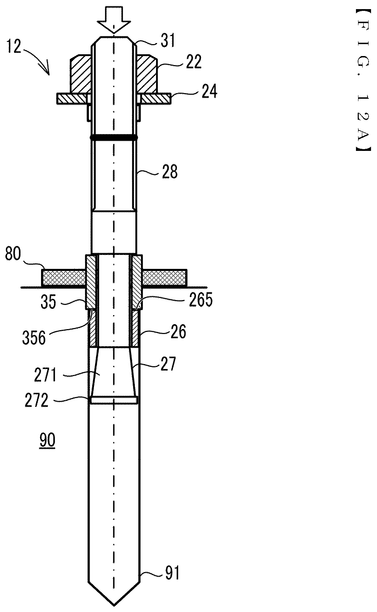

The following describes, with reference to FIG. 9 to FIG. 12C, a configuration of an anchor bolt 12 according to a second embodiment of the present disclosure. Here, FIG. 9 is a perspective diagram showing the anchor bolt 12. FIG. 10A is a side diagram of the anchor bolt 12, and FIG. 10B is a partial cross-sectional diagram of the anchor bolt 12. FIG. 10B shows a cross-sectional structure of members other than a taper bolt 31. In addition, FIG. 11A and FIG. 11B are diagrams showing a sleeve 35 attached to the anchor bolt 12.

It is noted that in the present embodiment, reference signs assigned to the above-described configurations of the first embodiment are also assigned to such configurations that are common to or cause substantially the same acts as those of the first embodiment, and description thereof is omitted.

As shown in FIG. 9, the anchor bolt 12 includes the taper bolt 31 (an example of the bolt main body of the present disclosure), the nut 22, the flat washer 24, the sleeve 35 (an example of the tubular member of the present disclosure), the expansively openable ring 26 (an example of the expansively openable member of the present disclosure), and the cone portion 27 (an example of the push-in portion of the present disclosure).

As shown in FIG. 10A, the taper bolt 31 is a bolt with a male screw formed on its outer peripheral surface, and its tip is integrally formed with the cone portion 27. The male screw is formed from a top toward the tip of the taper bolt 31, a part of a top side of the screw portion 28 thereof is exposed to outside, and a tip side of the taper bolt 31 is inserted in the anchor hole 91 (see FIG. 12A) formed in the skeleton 90.

The taper bolt 31 differs from the above-described taper bolt 21 of the first embodiment in that the taper bolt 31 includes a support portion 311 (see FIG. 10B) that is used to attach the sleeve 35 to the taper bolt 31. Otherwise, the taper bolt 31 has the same configuration as the taper bolt 21. The support portion 311 has a circular cross section smaller in diameter than the outer diameter of the screw portion 28, and is formed between the screw portion 28 and the cone portion 27. Since the support portion 311 is smaller in diameter than the screw portion 28, a step 312 is formed between the support portion 311 and the screw portion 28.

The cone portion 27 is provided at a tip side of the support portion 311. The outer diameter of a part of an outer peripheral surface of the cone portion 27 having the minimum diameter is the same in size as the outer diameter of the support portion 311, and the outer diameter of a part of the outer peripheral surface of the cone portion 27 having the maximum diameter (the protruding portion 272) is the same in size as the outer diameter of the screw portion 28.

As shown in FIG. 10B, the sleeve 35 is a tubular member formed in an approximately cylindrical shape. The sleeve 35 is attached to the taper bolt 31, and specifically, is attached to the support portion 311 of the taper bolt 31. The sleeve 35 is formed from the same material as the sleeve 25 of the first embodiment, namely, a synthetic resin.

The sleeve 35 differs from the sleeve 25 of the first embodiment in that, as shown in FIG. 11A and FIG. 11B, it is substantially divided into two and that it includes a plurality of locking ribs 352 instead of the locking pieces 252. Otherwise, the sleeve 35 has the same configuration as the sleeve 25.

The sleeve 35 includes: a tube main body portion 351 (an example of the tube main body portion of the present disclosure) formed in a cylindrical shape; and one or more locking ribs 352 (an example of the locking portion of the present disclosure). These portions are integrally formed with the sleeve 35. It is noted that although the above-described slits 253 are not formed in the sleeve 35, slits similar to the slits 253 may be formed in the sleeve 35.

The sleeve 35 includes two members 351A and 351B that are each formed in a semi-cylindrical shape. That is, the sleeve 35 has a configuration of being divided into the members 351A and 351B. The members 351A and 351B are fitted together to form the sleeve 35 in an approximately cylindrical shape. In the present embodiment, in a state where the sleeve 35 is separated in two, an inner side surface of one member 351A is brought into contact with a surface of the support portion 311, and in this state, the other member 351B is attached to the support portion 311. Side end portions of the member 351A and the member 351B at one side are connected to each other by two connecting portions 353 that are each in the shape of a thin-walled band.

Contact surfaces of the members 351A and 351B that are to be fitted together are provided with at least one or more pairs of an engagement groove 354 and an engagement projection 355. When the members 351A and 351B are fitted together, the engagement projection 355 is inserted in the engagement groove 354, and they are engaged with each other by a snap-fit mechanism.

The locking ribs 352 are configured to be locked to an inner side surface of the anchor hole 91 in a state where the anchor bolt 12 is inserted in the anchor hole 91 of the prescribed size and arranged in the anchor hole 91. The locking ribs 352 extend in the axial direction on the outer peripheral surface of the tube main body portion 351. Specifically, the locking ribs 352 extend from one end to the other end in the axial direction of the tube main body portion 351. The locking ribs 352 protrude perpendicularly from the peripheral surface of the tube main body portion 351, and each have an inclined surface at its tip side. In the present embodiment, six locking ribs 352 are formed and arranged at equal intervals in the peripheral direction on the outer peripheral surface of the tube main body portion 351. A length H2 (see FIG. 10B) between the center of the tube main body portion 351 and the locking ribs 352 is longer than the radius of the anchor hole 91. That is, the inner diameter of the anchor hole 91 is smaller than the maximum diameter of the sleeve 35, and larger than the maximum diameter of the taper bolt 31 (the outer diameter of the screw portion 28, the outer diameter of the protruding portion 272). As a result, when the anchor bolt 12 is inserted and pushed into the anchor hole 91, the six locking ribs 352 come in contact with and press the inner side surface of the anchor hole 91. This causes the sleeve 35 to be fixed in the anchor hole 91 in such a way as not to slip out and not to rotate in the peripheral direction in the anchor hole 91.

It is noted that the number of the locking ribs 352 is not limited to six. The number of the locking ribs 352 may be two, three, four, or five, or seven or more.

In addition, as is the case with the above-described first embodiment, it is configured such that a predetermined contact friction is generated between: a tube end portion 356 (an example of the first end portion of the present disclosure) provided on the insertion direction side of the sleeve 35; and the ring end portion 265 (an example of the second end portion of the present disclosure) provided on a side of the expansively openable ring 26 opposite to the insertion direction. Specifically, an end surface (hatched portion in FIG. 11B) of the tube end portion 356 of the sleeve 35 is formed as an uneven surface. It is noted that in the present embodiment, for example, the uneven surface machining may be applied only to the ring end portion 265. In addition, the uneven surface machining may be applied to both end surfaces of the tube end portion 356 and the ring end portion 265.

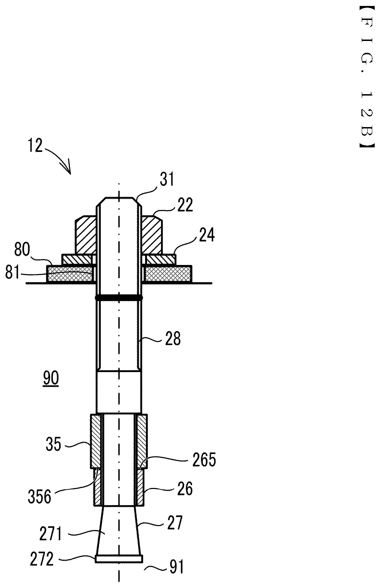

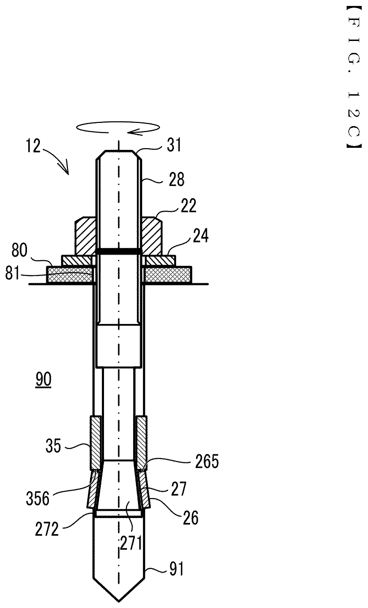

The following describes an attachment structure of the anchor bolt 12 with reference to FIG. 12A to FIG. 12C. Here, FIG. 12A is a diagram showing a state where the sleeve 35 of the anchor bolt 12 is inserted in the anchor hole 91, FIG. 12B is a diagram showing a state where the nut 22 is screw-fitted to the anchor bolt 12, and FIG. 12C is a diagram showing a fixed state where the nut 22 of the anchor bolt 12 has been tightened and the attachment construction is completed.

To construct the anchor bolt 12, the constructor inserts the anchor bolt 11 with the nut 22 and the washer 24 attached thereto, into the attachment hole 81 of the structural member 80, and into the anchor hole 91 (see FIG. 12A). Subsequently, the sleeve 35 is pushed into the anchor hole 91 until the sleeve 35 is arranged at a predetermined position in the anchor hole 91 (see FIG. 12B). Since the sleeve 35 is formed from a material that is softer than the structural member 80 and the inner wall of the anchor hole 91 (namely, the skeleton 90), the constructor can push in the sleeve 35 up to the predetermined position by, for example, lightly striking the top of the taper bolt 31 with a plastic hammer or the like. At this point in time, a part of the screw portion 28 of the taper bolt 31 protrudes outside from the skeleton 90.

It is noted that since, as described above, the sleeve 35 is formed from a synthetic resin that is softer than the skeleton 90, not from a metal, the sleeve 35 can be driven into the anchor hole 91 with a weaker force than a metal one is. In addition, when the locking ribs 352 of the sleeve 35 are pressed against the inner wall surface of the anchor hole 91, the locking ribs 352 are collapsed, and thereby the sleeve 35 is fixed in the anchor hole 91. As a result, the sleeve 35 can be fixed by applying an extremely smaller load to the inner wall surface of the anchor hole 91 than a conventional one. As a result, it is possible to prevent a crack from occurring in the inner wall surface of the anchor hole 91 when the sleeve 35 is driven thereinto.

Subsequently, the constructor tightens the nut 22 by a predetermined torque by using an electric or air driving impact wrench or the like (see FIG. 12C). This pulls up only the taper bolt 31, and inside the anchor hole 91, the cone portion 27 is pulled up together with the taper bolt 31. As the cone portion 27 is pulled up, the cone portion 27 is pressed into the inner hole 260 of the expansively openable ring 26. This causes the expansively openable ring 26 to be expanded radially outward by the inclination of the outer peripheral surface 271 of the cone portion 27 (see FIG. 12C). The expanded expansively openable ring 26 bites into the inner wall surface of the anchor hole 91 and is fixed therein. This causes the anchor bolt 12 to be fixed in the anchor hole 91. In addition, tightening the nut 22 causes the structural member 80 to be firmly attached to the skeleton 90 by the anchor bolt 12.

With the above-described configuration, the anchor bolt 12 of the present embodiment exhibits the same effect as the anchor bolt 11 of the first embodiment.

In particular, since the sleeve 35 is formed from a material, specifically the above-described synthetic resin, that is lower in hardness than the inner wall of the anchor hole 91 formed in the skeleton 90, the constructor can easily insert the sleeve 35 in the anchor hole 91 to a predetermined depth without strongly striking the taper bolt 31 into the anchor hole 91 with an iron hammer or the like. This improves the workability.

In addition, since, when the sleeve 35 is inserted, the locking ribs 352 apply only a very small load to the inner wall surface of the anchor hole 91, it is prevented that a metal part of the outer peripheral surface bites into the inner wall surface of the anchor hole 91 to cause a crack in the inner wall surface, as in a conventional product. In addition, since a small load is applied to the inner wall surface, it is possible to construct the anchor bolt 12 at a position close to an edge of the skeleton 90, compared to a conventional product.

In addition, since either or both of the end surfaces of the tube end portion 356 and the ring end portion 265 are formed as uneven surfaces, a contact friction larger than a contact friction between the expansively openable ring 26 and the cone portion 27 is generated between the tube end portion 356 and the ring end portion 265 during construction of the anchor bolt 12. This prevents the expansively openable ring 26 from sliding and rotating with respect to the sleeve 35, and further prevents the taper bolt 31 from rotating. As a result, it is possible to prevent the anchor bolt 12 from idling in the anchor hole 91 when the nut 22 is tightened, remarkably improving the workability of the anchor bolt 12. It is noted that as other configurations for causing a relatively large contact friction between the end surfaces of the tube end portion 356 and the ring end portion 265, a variety of modifications and working examples explained in the above-described first embodiment can be applied.

### [Third embodiment]

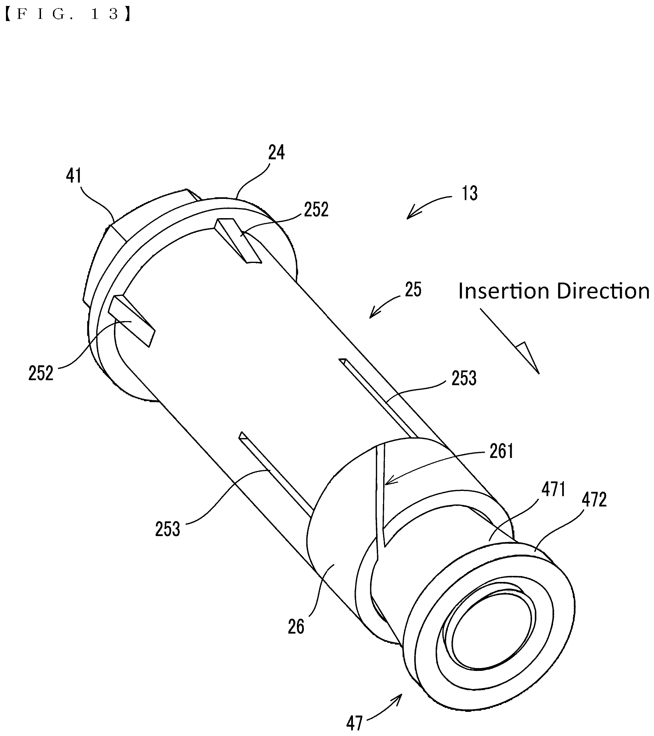

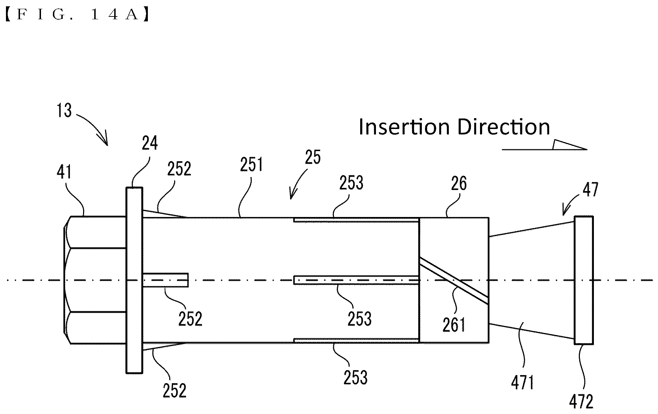

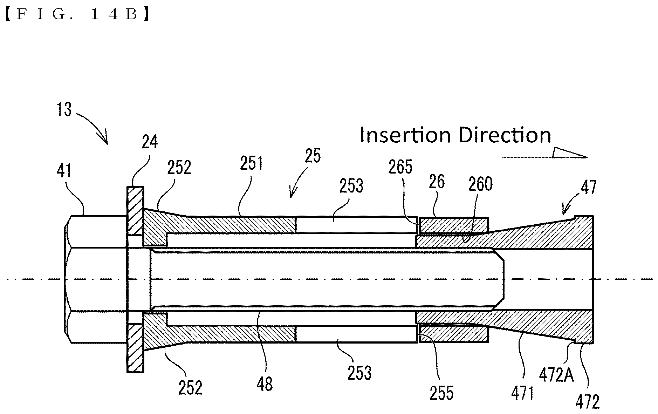

The following describes, with reference to FIG. 13, FIG. 14A, and FIG. 14B, a configuration of an anchor bolt 13 according to a third embodiment of the present disclosure. Here, FIG. 13 is a perspective diagram showing the anchor bolt 13. FIG. 14A is a side diagram of the anchor bolt 13, and FIG. 14B is a partial cross-sectional diagram of the anchor bolt 13. FIG. 14B shows a cross-sectional structure of members other than a bolt 41.

It is noted that in the present embodiment, reference signs assigned to the above-described configurations of the first embodiment are also assigned to such configurations that are common to or cause substantially the same acts as those of the first embodiment, and description thereof is omitted.

As shown in FIG. 13, the anchor bolt 13 includes the bolt 41 (an example of the bolt main body of the present disclosure), the flat washer 24, the sleeve 25 (an example of the tubular member of the present disclosure), the expansively openable ring 26 (an example of the expansively openable member of the present disclosure), and a cone nut 47 (an example of the push-in portion of the present disclosure). The anchor bolt 13 differs from the anchor bolt 11 of the first embodiment in that it includes the bolt 41 and the cone nut 47 instead of the taper bolt 21. Otherwise, the anchor bolt 13 has the same configuration as the anchor bolt 11.

The bolt 41 is what is called a hexagon head bolt, namely, a bolt having a hexagon nut at its head. A male screw is formed on a screw portion 48 of the bolt 41. The bolt 41 is formed from the same material as the above-described taper bolt 21 of the first embodiment.

The cone nut 47 is configured to be screwed on the screw portion 48 of the bolt 41, and is a nut member in which a female screw is formed. The cone nut 47 is formed from the same material as the above-described taper bolt 21 of the first embodiment. The cone nut 47 is screwed on the screw portion 48 of the bolt 41, and expands the expansively openable ring radially outward by being pushed into the inner hole 260 of the expansively openable ring 26. The cone nut 47 is formed in the same shape, namely in an approximately truncated cone shape, as the cone portion 27 of the taper bolt 21 except that the female screw is formed therein. That is, the cone nut 47 is formed in shape widening toward a tip of the anchor bolt 13 such that the outer diameter of a part of an outer peripheral surface 471 of the cone nut 47 having the minimum diameter is smaller than the inner diameter of the expansively openable ring 26, and the outer diameter of a part of the outer peripheral surface 471 having the maximum diameter is larger than the inner diameter of the expansively openable ring 26.

In addition, the cone nut 47 is provided with an annular protruding portion 472 that has the same configuration as the protruding portion 272 of the cone portion 27. For this reason, a step 472A is formed between the outer peripheral surface 471 and the protruding portion 472.

Since the cone nut 47 is to be inserted in the anchor hole 91 during the attachment construction of the anchor bolt 13, the outer diameter of the protruding portion 472 is smaller than the inner diameter of the anchor hole 91. That is, the anchor hole 91 formed in the skeleton 90 has a prescribed size that is larger than the maximum diameter of the cone nut 47 (the outer diameter of the protruding portion 472).

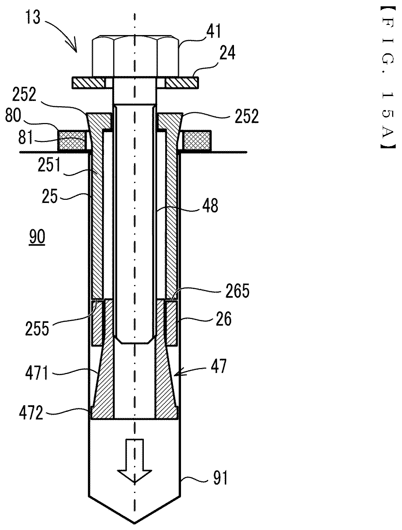

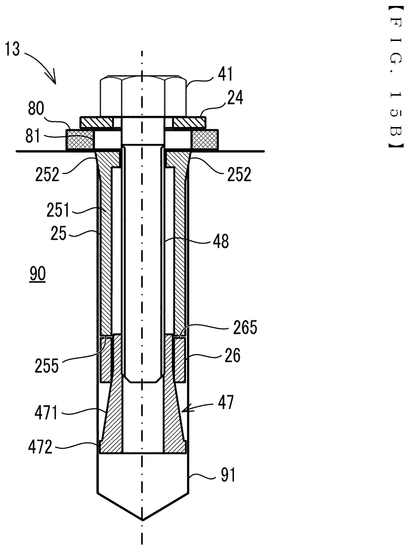

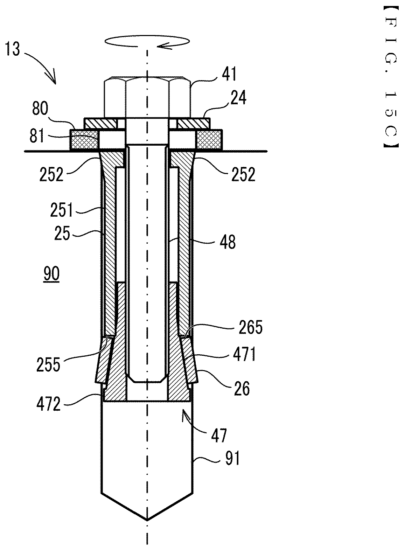

The following describes an attachment structure of the anchor bolt 13 with reference to FIG. 15A to FIG. 15C. Here, FIG. 15A is a diagram showing a state where the sleeve 25 and the cone nut 47 of the anchor bolt 13 are inserted in the anchor hole 91, FIG. 15B is a diagram showing a state where the bolt 41 is screw-fitted into the cone nut 47, and FIG. 15C is a diagram showing a fixed state where the bolt 41 is tightened to the cone nut 47 and the attachment construction is completed. It is noted that the slits 253 are omitted in FIG. 15A to FIG. 15C.

To construct the anchor bolt 13, the constructor inserts the anchor bolt 13 with the bolt 41 and the flat washer 24 attached thereto, into the attachment hole 81 of the structural member 80, and into the anchor hole 91 (see FIG. 15A). At this time, the constructor pushes the sleeve 25 into the anchor hole 91 until the upper end of the sleeve 25 becomes flush with the surface of the skeleton 90 (see FIG. 15B). This allows the locking pieces 252 of the sleeve 25 to be pressed against the inner surface of the anchor hole 91, and the sleeve 25 is fixed in the anchor hole 91.

Subsequently, the constructor tightens the bolt 41 by a predetermined torque by using an electric or air driving impact wrench or the like (see FIG. 15C). This causes the bolt 41 to be screw-fitted into the cone nut 47, and only the cone nut 47 is pulled up. As the cone nut 47 is pulled up, the cone nut 47 is pressed into the inner hole 260 of the expansively openable ring 26. This causes the expansively openable ring 26 to be expanded radially outward by the inclination of the outer peripheral surface 471 of the cone nut 47 (see FIG. 15C). The expanded expansively openable ring 26 bites into the inner wall surface of the anchor hole 91 and is fixed therein. This causes the anchor bolt 13 to be fixed in the anchor hole 91.

With the above-described configuration, the anchor bolt 13 of the present embodiment exhibits the same effect as the anchor bolt 11 of the first embodiment.

### [Fourth embodiment]

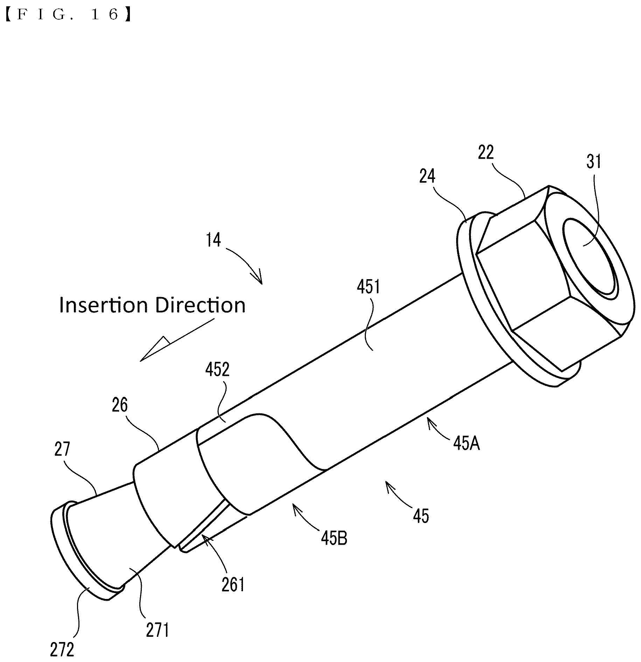

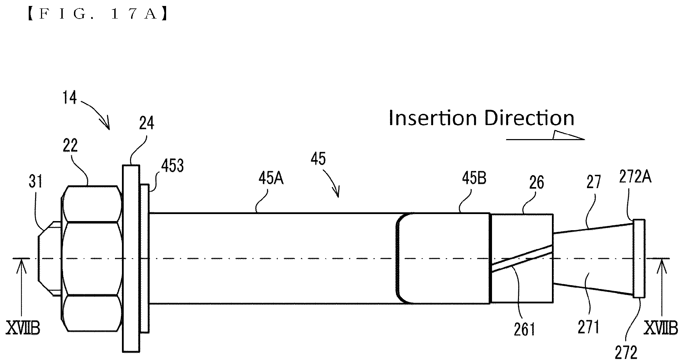

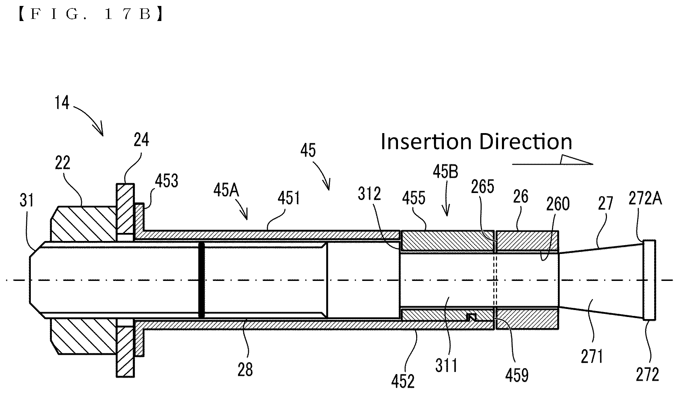

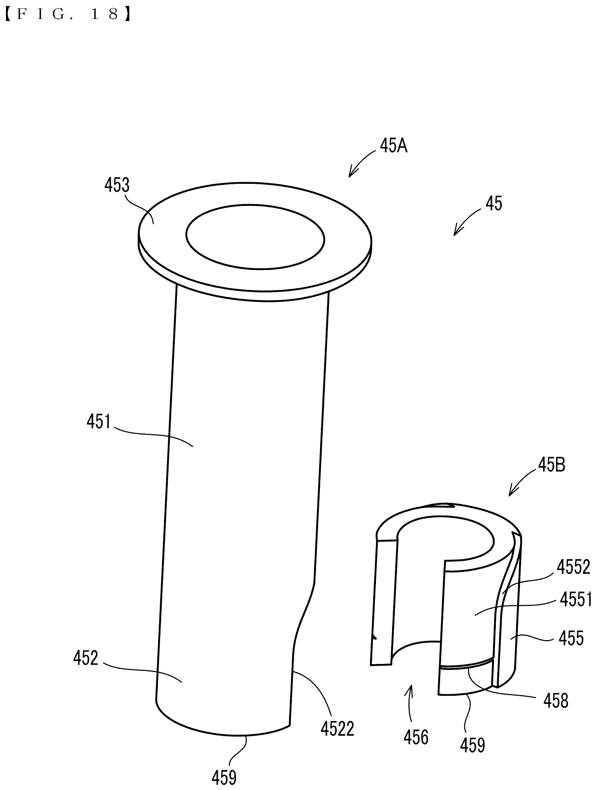

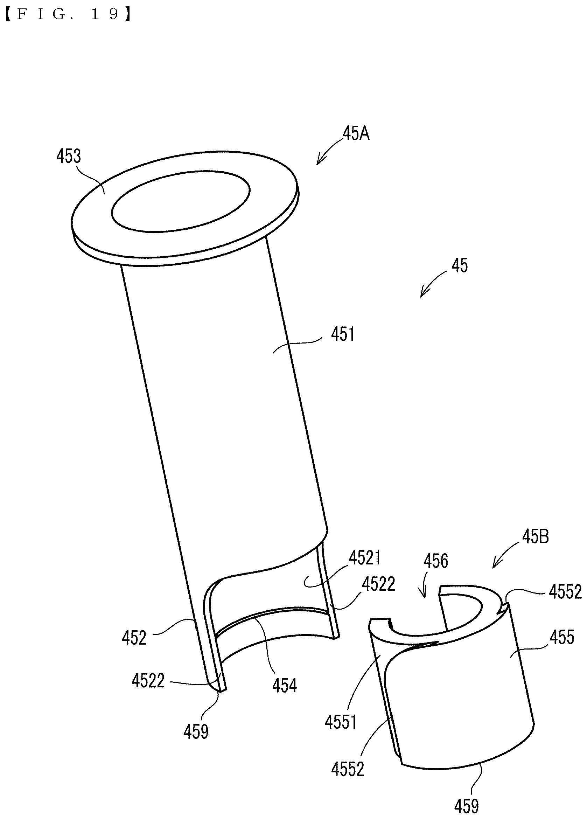

The following describes, with reference to FIG. 16 to FIG. 19, a configuration of an anchor bolt 14 according to a fourth embodiment of the present disclosure. Here, FIG. 16 is a perspective diagram showing the anchor bolt 14. FIG. 17A is a side diagram of the anchor bolt 14, and FIG. 17B is a partial cross-sectional diagram of the anchor bolt 14. FIG. 17B shows a cross-sectional structure of members other than the taper bolt 31. In addition, FIG. 18 and FIG. 19 are diagrams showing a sleeve 45 attached to the anchor bolt 14.

It is noted that in the present embodiment, reference signs assigned to the above-described configurations of the second embodiment are also assigned to such configurations that are common to or cause substantially the same acts as those of the second embodiment, and description thereof is omitted.

As shown in FIG. 16, the anchor bolt 14 includes the taper bolt 31 (an example of the bolt main body of the present disclosure), the nut 22, the flat washer 24, the sleeve 45 (an example of the tubular member of the present disclosure), the expansively openable ring 26 (an example of the expansively openable member of the present disclosure), and the cone portion 27 (an example of the push-in portion of the present disclosure).

As shown in FIG. 17A and FIG. 17B, the taper bolt 31 is a bolt with a male screw formed on its outer peripheral surface, and its tip is integrally formed with the cone portion 27. The male screw is formed from a top toward the tip of the taper bolt 31. A tip side of the taper bolt 31 is inserted in the anchor hole 91 (see FIG. 12A) formed in the skeleton 90. It is noted that since the taper bolt 31 has the same configuration as the one applied to the above-described second embodiment, a detailed description thereof is omitted here.

As shown in FIG. 17A and FIG. 17B, the sleeve 45 is a tubular member formed in an approximately cylindrical shape. The sleeve 45 is attached to the taper bolt 31, and specifically, is attached in a state where a part thereof is supported by the support portion 311 of the taper bolt 31. The sleeve 45 is formed from the same material as the sleeve 25 of the first embodiment and the sleeve 35 of the second embodiment, namely, from a synthetic resin. In the present embodiment, the outer diameter of the sleeve 45 is formed to be approximately the same as the inner diameter of the anchor hole 91 of the prescribed size.

As shown in FIG. 18 and FIG. 19, the sleeve 45 includes a first sleeve 45A and a second sleeve 45B. The first sleeve 45A and the second sleeve 45B are assembled to each other to form the sleeve 45 as a tubular member. In the present embodiment, the first sleeve 45A and the second sleeve 45B are formed from different types of synthetic resin, and the first sleeve 45A is formed from a synthetic resin that is softer than that of the second sleeve 45B. Of course, the first sleeve 45A and the second sleeve 45B may be formed from materials that have the same hardness.

The first sleeve 45A includes: a tube main body portion 451 (an example of the tube main body portion of the present disclosure) that is inserted onto the screw portion 28 of the taper bolt 31, and is formed in a cylindrical shape elongated in the axial direction of the screw portion 28; and an engagement portion 452 formed in a semi-cylindrical shape protruding from an end part in an insertion direction (the tip side). The first sleeve 45A is formed to be longer in the axial direction than the second sleeve 45B that is described below. Specifically, the first sleeve 45A is formed to be two times or more of the second sleeve 45B in length in the axial direction. As shown in FIG. 17B, the tube main body portion 451 is inserted onto and attached to the screw portion 28 so as to cover almost the entirety of the screw portion 28.

An end part of the tube main body portion 451 on a side opposite to the insertion direction (a base end side) is integrally formed with a flange 453 that is abutted on the flat washer 24. The outer diameter of the flange 453 is larger than the inner diameter of an inner hole of the flat washer 24.

The engagement portion 452 is configured to be engaged with the second sleeve 45B. As shown in FIG. 19, a projection rib 454 is formed to project continually in the peripheral direction on an inner surface 4521 of the engagement portion 452. That is, the projection rib 454 extends on the inner surface 4521 in the peripheral direction. The projection rib 454 is configured to be engaged with an engagement groove 458 (see FIG. 18) formed in the second sleeve 45B, the engagement groove 458 described below. In the present embodiment, the projection rib 454 is formed in a hook shape so that the projection rib 454 engaged with the engagement groove 458 is hardly disengaged. Specifically, an inclined surface extending from its top to the inner surface 4521 is formed on a tip side of the projection rib 454, and a perpendicular surface extending from the top to the inner surface 4521 is formed on a base end side of the projection rib 454.

The second sleeve 45B is a member configured to be attached to the support portion 311, and includes a main body portion 455 in which is formed a slit 456 extending along the center axis direction in the peripheral wall of the tubular member.

The slit 456 is configured to be spread so that the second sleeve 45B is expanded when the second sleeve 45B is attached to the support portion 311. In a state where the slit 456 of the second sleeve 45B is spread, the second sleeve 45B can be attached to the support portion 311.

As shown in FIG. 18, an engagement surface 4551 is formed on the outer peripheral surface of the main body portion 455 of the second sleeve 45B, wherein the engagement surface 4551 is brought into surface contact with the inner surface 4521 of the engagement portion 452. The thickness of the engagement surface 4551 is obtained by reducing the thickness of the engagement portion 452 from the outer peripheral surface of the main body portion 455. For this reason, a step 4552 is formed between the engagement surface 4551 and the outer peripheral surface of the main body portion 455.

When the first sleeve 45A and the second sleeve 45B are assembled to each other, in a state where the inner surface 4521 of the engagement portion 452 is abutted on the engagement surface 4551, the outer peripheral surface of the engagement portion 452 becomes flush with the outer peripheral surface of the main body portion 455. In addition, in a state where the first sleeve 45A and the second sleeve 45B are assembled to each other, an end portion 4522 of the engagement portion 452 at an end in the peripheral direction thereof and the step 4552 face each other in the peripheral direction, and come close to or abut on each other. This allows the first sleeve 45A and the second sleeve 45B to be engaged with each other in the peripheral direction. Accordingly, the first sleeve 45A and the second sleeve 45B are integrated with each other in the anchor bolt 14. This prevents one of the sleeves from rotating relatively to the other around the axis during construction of the anchor bolt 14.

The engagement groove 458 in which the projection rib 454 can be inserted is formed in the engagement surface 4551 of the tube main body portion 451. The engagement groove 458 is formed continually in the peripheral direction. That is, the engagement groove 458 is formed to extend in the peripheral direction on the engagement surface 4551. When the first sleeve 45A and the second sleeve 45B are assembled to each other, the projection rib 454 is inserted in the engagement groove 458. This allows the first sleeve 45A and the second sleeve 45B to be engaged with each other in the insertion direction. As a result, the first sleeve 45A and the second sleeve 45B are hardly separated from each other during the construction of the anchor bolt 14.

In addition, as is the case with the above-described first to third embodiments, an end surface of a tube end portion 459 (an example of the first end portion of the present disclosure) provided on the insertion direction side of the sleeve 45 is formed as an uneven surface such that a relatively large contact friction is generated between the tube end portion 459 and the ring end portion 265 (an example of the second end portion of the present disclosure) provided on a side of the expansively openable ring 26 opposite to the insertion direction. It is noted that the tube end portion 459 is an end portion located on the insertion direction side of the sleeve 45 in the state where the first sleeve 45A and the second sleeve 45B are assembled to each other. It is noted that in the present embodiment, for example, the uneven surface machining may be applied only to the ring end portion 265. In addition, the uneven surface machining may be applied to both end surfaces of the tube end portion 459 and the ring end portion 265.

In the sleeve 45 configured as described above, first, the second sleeve 45B is attached to the support portion 311. Subsequently, the first sleeve 45A is inserted onto the screw portion 28, and is pressed toward the second sleeve 45B. At this time, the engagement portion 452 is overlapped on and engaged with the engagement surface 4551. This allows the first sleeve 45A and the second sleeve 45B to be engaged with each other in the peripheral direction. In addition, since the projection rib 454 is engaged with the engagement groove 458, the first sleeve 45A and the second sleeve 45B are engaged with each other in the insertion direction, too.

Although the present embodiment shows as one example a configuration where the projection rib 454 and the engagement groove 458 extend in the peripheral direction, the projection rib 454, for example, may extend in the axial direction. In this case, it is preferable that the engagement groove 458 extends in the axial direction, too, and is located in such a way as to be engaged with the projection rib 454. In this case, at least one projection rib 454 and at least one engagement groove 458 may be provided, and more preferably, a plurality of projection ribs 454 and a plurality of engagement grooves 458 are provided. It is noted that the projection rib 454 and the engagement groove 458 are not necessarily required and may be omitted.

With the anchor bolt 14 of the present embodiment, since the above-described first sleeve 45A is provided therein, in a state where the anchor bolt 14 is attached to the anchor hole 91, not only the outer peripheral surface of the second sleeve 45B, but also the outer peripheral surface of the first sleeve 45A comes in contact with the inner surface of the anchor hole 91. This causes an appropriate contact friction on the anchor bolt 14 in the peripheral direction. It is noted that the method for constructing the anchor bolt 14 by attaching it to the anchor hole 91 is the same as the method for constructing the anchor bolt 12 described in the second embodiment, and thus, for the construction method, please consult the above-provided description of the attachment structure with reference to FIG. 12A to FIG. 12C.

With the above-described configuration, the anchor bolt 14 of the present embodiment exhibits the same effect as the anchor bolts 11, 12, 13 of the first to third embodiments described above.

Specifically, since either or both of the end surfaces of the tube end portion 459 and the ring end portion 265 are formed as uneven surfaces, a contact friction larger than a contact friction between the expansively openable ring 26 and the cone portion 27 is generated between the tube end portion 459 and the ring end portion 265 during construction of the anchor bolt 14. This prevents the expansively openable ring 26 from sliding and rotating with respect to the sleeve 45, and further prevents the taper bolt 31 from rotating. As a result, it is possible to prevent the anchor bolt 14 from idling in the anchor hole 91 when the nut 22 is tightened, remarkably improving the workability of the anchor bolt 14. It is noted that as other configurations for causing a relatively large contact friction between the end surfaces of the tube end portion 459 and the ring end portion 265, a variety of modifications and working examples explained in the above-described first embodiment can be applied.

### [Fifth embodiment]

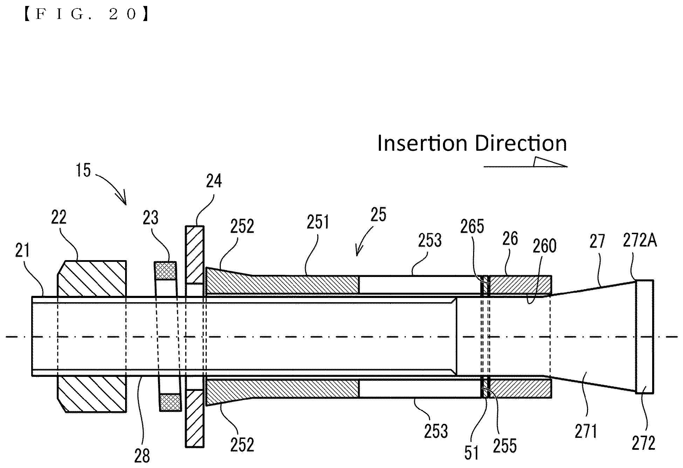

The following describes, with reference to FIG. 20, a configuration of an anchor bolt 15 according to a fifth embodiment of the present disclosure. Here, FIG. 20 is a partial cross-sectional diagram of the anchor bolt 15 according to the fifth embodiment of the present disclosure.

It is noted that in the present embodiment, reference signs assigned to the above-described configurations of the first embodiment are also assigned to such configurations that are common to or cause substantially the same acts as those of the first embodiment, and description thereof is omitted.

As shown in FIG. 20, the anchor bolt 15 includes the taper bolt 21 (an example of the bolt main body of the present disclosure), the nut 22, the spring washer 23, the flat washer 24, the sleeve 25 (an example of the tubular member of the present disclosure), the expansively openable ring 26 (an example of the expansively openable member of the present disclosure), and the cone portion 27 (an example of the push-in portion of the present disclosure).

The anchor bolt 15 of the present embodiment differs from the anchor bolt 11 of the first embodiment in that it further includes a resin washer 51 (an example of an annular member of the present disclosure). Otherwise, the anchor bolt 15 has the same configuration as the anchor bolt 11.

As shown in FIG. 20, in the anchor bolt 15, the resin washer 51 is provided between the tube end portion 255 of the sleeve 25 and the ring end portion 265 of the expansively openable ring 26. The resin washer 51 is a resin flat washer whose outer diameter is equal to the outer diameter of the expansively openable ring 26 and whose thickness is approximately 0.5 mm to 5.0 mm. The resin washer 51 is formed from a material that is lower in hardness and higher in viscosity than the expansively openable ring 26.

With this configuration where the resin washer 51 is interposed between the tube end portion 255 and the ring end portion 265, a contact friction larger than a contact friction between the expansively openable ring 26 and the cone portion 27 is generated between the tube end portion 255 and the ring end portion 265 via the resin washer 51 during construction of the anchor bolt 15. This prevents the expansively openable ring 26 from sliding and rotating with respect to the sleeve 25, and further prevents the taper bolt 21 from rotating. As a result, it is possible to prevent the anchor bolt 15 from idling in the anchor hole 91 when the nut 22 is tightened, remarkably improving the workability of the anchor bolt 15.

It is noted that when the resin washer 51 is provided between the tube end portion 255 and the ring end portion 265, either or both of the end surfaces of the tube end portion 255 and the ring end portion 265 may not necessarily be formed as uneven surfaces. However, to cause a larger contact friction, the end surfaces may each be formed as an uneven surface, or applied with a resin coating.

### [Other working examples]

Although a plurality of working examples for causing a larger contact friction between the tube end portion 255 and the ring end portion 265 are presented in the above-described embodiments as examples of a configuration for preventing sliding and rotation of the expansively openable ring 26, for example, working examples respectively having configurations shown in FIG. 21 to FIG. 27 may be applied, as the configuration for preventing sliding and rotation of the expansively openable ring 26, to each of the anchor bolts of the above-described first to fifth embodiments. It is noted that when any of these working examples is applied, a configuration for causing a contact friction between the tube end portion 255 and the ring end portion 265 may not necessarily be applied.

For example, as shown in FIG. 21, in the anchor bolt 11 of the first embodiment, the tube end portion 255 and the ring end portion 265 may be configured to be engaged with each other around the axis. Specifically, the tube end portion 255 includes an engaging portion 256 (an example of a first engagement portion, a first protruding portion of the present disclosure), and the ring end portion 265 includes an engaged portion 266 (an example of a second engagement portion of the present disclosure) configured to be engaged with the engaging portion 256 around the axis. It is noted that this configuration can be applied to each of the anchor bolts of the second to fifth embodiments.

With such a configuration having the engaging portion 256 and the engaged portion 266, during construction of the anchor bolt 11 in the anchor hole 91, the engaging portion 256 and the engaged portion 266 are engaged with each other around the axis, thereby preventing the expansively openable ring 26 from sliding and rotating with respect to the sleeve 25. This further prevents the taper bolt 21 from rotating. As a result, it is possible to prevent the anchor bolt 11 from idling in the anchor hole 91 when the nut 22 is tightened, remarkably improving the workability of the anchor bolt 11.

As shown in FIG. 21 and FIG. 22, the engaging portion 256 is, for example, a projection (protruding portion) protruding from an end surface of the tube end portion 255 toward the expansively openable ring 26, in other words, protruding in the insertion direction. In addition, the engaged portion 266 is an end opening at the first end portion 262 of the slit 261 appearing in the ring end portion 265. The engaging portion 256 is inserted in the first end portion 262. This allows the engaging portion 256 and the engaged portion 266 to be engaged with each other around the axis, preventing the expansively openable ring 26 from sliding and rotating with respect to the sleeve 25.

In addition, the engaged portion 266 is not limited to the first end portion 262 of the slit 261. For example, as shown in FIG. 23A, it may be a recessed groove 267 (an example of the second engagement portion, a recessed portion of the present disclosure) formed on an end surface of the ring end portion 265. In addition, as shown in FIG. 23A, a plurality of engaging portions 256 may be formed on the tube end portion 255, and a plurality of recessed grooves 267 into which the engaging portions 256 can be inserted respectively may be formed on the ring end portion 265.

In addition, as shown in FIG. 23B, when a plurality of engaging portions 256 are formed protruding in the insertion direction from the peripheral surface of the sleeve 25 beyond the tube end portion 255, the recessed grooves 267 may be formed to extend from end portions of the ring end portion 265 in the radius direction up to the peripheral surface of the expansively openable ring 26.

In addition, as another configuration where the tube end portion 255 and the ring end portion 265 are engaged with each other around the axis, as shown in FIG. 24, the sleeve 25 may be provided with a protruding portion 257 (an example of the first engagement portion, a second protruding portion of the present disclosure) protruding from the tube end portion 255 in the insertion direction. The protruding portion 257 is, for example, formed in the shape of a tube protruding from the tube end portion 255 by a length shorter than a height size L1 (see FIG. 4A) of the expansively openable ring 26, and having the same inner diameter as the sleeve 25. In this case, as shown in FIG. 25A, the protruding portion 257 of the sleeve 25 is configured to be pressed against the inner peripheral surface of the inner hole 260, more specifically against a part (inner peripheral portion) of the inner peripheral surface that is on the ring end portion 265 side. For example, the outer diameter size of the protruding portion 257 and the inner diameter size of the expansively openable ring 26 are determined so that the protruding portion 257 is fitted into the inner hole 260. Even with such a configuration, the tube end portion 255 and the ring end portion 265 are engaged with each other around the axis.

It is noted that as shown in FIG. 25B, a recessed portion 260A of an annular shape into which the protruding portion 257 can be fitted may be formed at a part of the inner hole 260 of the expansively openable ring 26 on the ring end portion 265 side.

In addition, although FIG. 24 shows a configuration where the slits 253 are formed from the tube main body portion 251 to the protruding portion 257, the slits 253 may be formed only in the protruding portion 257 without being formed in the tube main body portion 251. Of course, since the slits 253 are not an essential element, the slits 253 may not be formed in either of the tube main body portion 251 and the protruding portion 257 of the sleeve 25. In this case, the protruding portion 257 is a tubular member that is formed integrally with the tube main body portion 251 so as to extend from the tube end portion 255 in the insertion direction, and has an outer diameter size that allows it to be fitted into and pressed against the inner peripheral surface of the inner hole 260.

It is noted that the shape and protruding length of the protruding portion 257 are not limited to those of the above-described configuration. For example, the protruding length of the protruding portion is not limited to a size shorter than the height size L1 (see FIG. 4A) of the expansively openable ring 26. The protruding length of the protruding portion 257 may be equal to or longer than the height size L1 as far as it is configured to be fitted into and pressed against the inner peripheral surface of the inner hole 260. In addition, the shape of the protruding portion 257 is not limited to the above-described shape. For example, the protruding portion 257 may not be configured to abut on and press a part of the inner peripheral surface of the inner hole 260 on the ring end portion 265 side, but may be formed in a shape to abut on and press another part. That is, the part of the inner peripheral surface of the inner hole 260 that is pressed by the protruding portion 257 is not limited to the part of the inner peripheral surface on the ring end portion 265 side.

In addition, as another configuration where the tube end portion 255 and the ring end portion 265 are engaged with each other around the axis, as shown in FIG. 26A and FIG. 26B, the sleeve 25 may be provided with a plurality of protruding portions 258 (an example of the first engagement portion, the second protruding portion of the present disclosure) protruding from the tube end portion 255 in the insertion direction. The protruding portions 258 are protruding pieces that protrude from the tube end portion 255 in the insertion direction so as to be flush with the inner peripheral surface of the tube main body portion 251 of the sleeve 25. Here, FIG. 26A and FIG. 26B are side diagrams viewing the sleeve 25 from the axial direction; FIG. 26A shows four protruding portions 258, and FIG. 26B shows two protruding portions 258.

The formation position of the protruding portion 258 and the inner diameter size of the expansively openable ring 26 are determined such that the protruding portions 258 are fitted in the inner peripheral surface of the inner hole 260 when they are inserted in the inner hole 260. Even with such a configuration, the tube end portion 255 and the ring end portion 265 are engaged with each other around the axis.

It is noted that the protruding portions 258 are formed in the same shape and size, and are disposed in such a way as to face each other with respect to the center axis of the sleeve 25.

In addition, as another configuration where the tube end portion 255 and the ring end portion 265 are engaged with each other around the axis, as shown in FIG. 27, the end surface of the tube end portion 255 may be an inclined surface inclined at a predetermined angle with respect to a perpendicular surface perpendicular to the taper bolt 21, and the end surface of the ring end portion 265 may be an inclined surface inclined at the same predetermined angle with respect to the perpendicular surface. The angle of the inclined surfaces is determined to be in a range of 0 degrees or more and 45 degrees or less, preferably in a range of 5 degrees to 15 degrees. With such a configuration, after the end surface (inclined surface) of the tube end portion 255 comes into surface contact with the end surface (inclined surface) of the ring end portion 265 during construction of the anchor bolt, if the expansively openable ring 26 tries to rotate in this surface contact state, the expansively openable ring 26 is prevented from sliding and rotating with respect to the sleeve 25.

It is noted that the above-described working examples may be applied to the anchor bolt of the first embodiment, as well as to the anchor bolts of the second to fifth embodiments.

## Claims

1. An anchor bolt configured to be fixed in an anchor hole formed in a skeleton, the anchor bolt comprising:
a bolt main body, with a screw thread formed on an outer peripheral surface thereof, configured to be inserted in the anchor hole;
a tubular member provided to the bolt main body and configured to, in a state of being inserted in the anchor hole together with the bolt main body, come in contact with and be locked to an inner side surface of the anchor hole;
an annular expansively openable member provided to the bolt main body more on an insertion direction side of the anchor bolt than the tubular member, and divided in a peripheral direction; and
a push-in portion provided to the bolt main body more on the insertion direction side of the anchor bolt than the expansively openable member, and configured to expand the expansively openable member radially outward by being pushed into an inner hole of the expansively openable member, wherein
the anchor bolt is configured such that a contact friction of a predetermined value or more is generated between a first end portion located on the insertion direction side of the tubular member and a second end portion located on a side of the expansively openable member opposite to the insertion direction.

2. The anchor bolt according to claim 1, wherein
either or both of an end surface of the first end portion and an end surface of the second end portion are uneven surfaces.

3. The anchor bolt according to claim 1, wherein
a high-friction coating is applied to either or both of an end surface of the first end portion and an end surface of the second end portion.

4. The anchor bolt according to claim 3, wherein
an annular member formed from synthetic resin that is lower in hardness than the expansively openable member is interposed between the first end portion and the second end portion.

5. An anchor bolt configured to be fixed in an anchor hole formed in a skeleton, the anchor bolt comprising:
a bolt main body, with a screw thread formed on an outer peripheral surface thereof, configured to be inserted in the anchor hole;
a tubular member provided to the bolt main body and configured to, in a state of being inserted in the anchor hole together with the bolt main body, come in contact with and be locked to an inner side surface of the anchor hole;
an annular expansively openable member provided to the bolt main body more on an insertion direction side of the anchor bolt than the tubular member, and divided in a peripheral direction; and
a push-in portion provided to the bolt main body more on the insertion direction side of the anchor bolt than the expansively openable member, and configured to expand the expansively openable member radially outward by being pushed into an inner hole of the expansively openable member, wherein
the anchor bolt is configured such that a first end portion located on the insertion direction side of the tubular member and a second end portion located on a side of the expansively openable member opposite to the insertion direction are engaged with each other around the axis.

6. The anchor bolt according to claim 5, wherein
the first end portion includes a first engagement portion, and
the second end portion includes a second engagement portion configured to be engaged with the first engagement portion.

7. The anchor bolt according to claim 6, wherein
a dividing slit is formed in the expansively openable member in such a way as to divide the expansively openable member in the peripheral direction,
the second engagement portion is an end opening of the dividing slit at the second end portion, and
the first engagement portion is a first protruding portion protruding from the first end portion in the insertion direction and configured to be inserted in the end opening and engaged therewith around the axis.

8. The anchor bolt according to claim 6, wherein
the second engagement portion is an inner peripheral surface of an inner hole of the expansively openable member, and
the first engagement portion is a second protruding portion protruding from the first end portion in the insertion direction and configured to be inserted in the inner hole of the expansively openable member and pressed against the inner peripheral surface.

9. The anchor bolt according to claim 6, wherein
one of the first engagement portion and the second engagement portion is at least one projection protruding from the first end portion in the insertion direction, and
the other of the first engagement portion and the second engagement portion is at least one recessed portion in which the projection can be inserted.

10. The anchor bolt according to claim 5, wherein
an end surface of the first end portion and an end surface of the second end portion are each an inclined surface inclined at a predetermined angle with respect to a surface that is perpendicular to an axial direction of the bolt main body.

11. The anchor bolt according to any one of claims 1 to 10, wherein
a dividing line of the expansively openable member is formed to extend from a first line end portion that appears at one side of the expansively openable ring to a second line end portion that appears at the other side of the expansively openable ring, and the first line end portion and the second line end portion are separated from each other in the peripheral direction of the expansively openable member.

12. The anchor bolt according to any one of claims 1 to 10, wherein
the tubular member is formed from a material containing as main component a synthetic resin that is lower in hardness than the expansively openable member, and
the expansively openable member is formed from a material containing a metal as main component.

13. The anchor bolt according to any one of claims 1 to 10, wherein
the tubular member includes at least one slit extending from the first end portion toward a side opposite to the insertion direction.

14. The anchor bolt according to claim 13, wherein
the slit extends to a vicinity of a center of the tubular member.
